# EUROPÄISCHE PATENTSCHRIFT

(11) **EP 3 873 842 B1**
(45) Veröffentlichungstag und Bekanntmachung des Hinweises auf die Patenterteilung: **06.12.2023**
(21) Anmeldenummer: 19787314.4
(22) Anmeldetag: 23.10.2019
(51) Int. Cl.: B66B 23/10

(54) **VERFAHREN ZUM MONTIEREN EINER FÖRDERKETTE FÜR EIN PALETTENBAND EINES FAHRSTEIGS**
METHOD FOR MOUNTING A CONVEYOR CHAIN FOR A PALLET BELT OF A WALKWAY
PROCÉDÉ DE MONTAGE D'UNE CHAÎNE DE TRANSPORT POUR UNE BANDE DE PALETTES D'UN TROTTOIR ROULANT

(30) Priorität: 30.10.2018 EP 18203448
(43) Veröffentlichungstag der Anmeldung: 08.09.2021
(73) Patentinhaber: INVENTIO AG, 6052 Hergiswil (CH)
(72) Erfinder: PRAXMARER, Dominik, 1110 Wien (AT); KLEEWEIN, Gerhard, 3021 Pressbau (AT); STREIBIG, Kurt, 3031 Rekawinkel (AT)
(74) Vertreter: Inventio AG
(86) Internationale Anmeldenummer: PCT/EP2019/078829
(87) Internationale Veröffentlichungsnummer: WO 2020/089002

(56) Entgegenhaltungen:
- US-A- 2 059 063
- US-A1- 2013 180 822
- US-A1- 2017 197 809
- US-A1- 2017 297 873

## Beschreibung

Die vorliegende Erfindung betrifft ein Verfahren zum Montieren einer Förderkette für ein Palettenband eines Fahrsteigs sowie ein Verfahren zum Austauschen eines Anbindungselements in einer Förderkette und ein Verfahren zum Montieren eines Palettenbandes für einen Fahrsteig.

Fahrsteige werden als Personenbeförderungsanlagen dazu eingesetzt, Personen innerhalb eines Bauwerks entlang eines im Regelfall horizontalen oder lediglich geringfügig geneigten Verfahrwegs zu befördern. Ein Fahrsteig verfügt hierzu über ein Palettenband, auf welchem Passagiere stehen können und welches umlaufend entlang des Verfahrwegs bewegt werden kann. An dem Palettenband ist eine Vielzahl von Paletten hintereinander angeordnet. Jede der Paletten ist im Regelfall zwischen zwei Förderketten angebracht, die entlang gegenüberliegender Seiten des Palettenbandes angeordnet sind. Jede der Förderketten ist wiederum aus einer Vielzahl länglicher Kettenglieder zusammengesetzt, welche in einem Teilungsabstand hintereinander angeordnet sind und über Kettenbolzen schwenkbar miteinander verbunden sind, sodass die gesamte Förderkette auf Zug hochbelastbar ist. Der Teilungsabstand entspricht hierbei im Wesentlichen dem Abstand der Mittellängsachsen der Kettenbolzen.

Das Palettenband ist umlaufend angeordnet. Das heißt, dass die Paletten mithilfe der Förderketten in einer Vorlaufrichtung entlang des Verfahrwegs bewegt werden können. An Enden des Verfahrwegs wird das Palettenband jeweils durch Umlenkeinrichtungen umgelenkt, sodass die Paletten mit dem ringförmig geschlossenen Palettenband in entgegengesetzter Rücklaufrichtung zurück zum Anfang des Verfahrwegs verlagert werden können. Entsprechende Umlenkeinrichtungen verfügen in der Regel über Umlenkkettenräder, welche jeweils mit einer der Förderketten zusammenwirken, um diese von der Vorlaufrichtung in die Rücklaufrichtung oder umgekehrt im Allgemeinen um 180° umzulenken.

Sofern ein Fahrsteig in einem neu zu bauenden Bauwerk installiert werden soll, kann vorgesehen werden, dass zumindest Teile des Fahrsteigs in einem Boden des Bauwerks integriert werden, sodass eine durch die Paletten im Vorlauf gebildete Lauffläche möglichst bündig mit einer Oberfläche dieses Bodens abschließen kann. Es kann vorteilhaft sein, für diesen Zweck Fahrsteige mit einer geringen Bauhöhe vorzusehen, um in den Böden des Bauwerks keine tiefen Gruben vorsehen zu müssen, in denen der Fahrsteig aufgenommen werden kann.

Soll in einem bereits bestehenden Bauwerk ein Fahrsteig nachgerüstet werden, kann es in manchen Fällen, beispielsweise aus Statikgründen, nicht möglich oder zumindest sehr aufwendig sein, diesen zumindest teilweise in einem Boden des Bauwerks zu versenken. In diesem Fall muss der Fahrsteig auf dem Boden des Bauwerks aufgebaut werden. Vorteilhafterweise sollte hierbei ein Höhenunterschied zwischen einem Niveau, auf dem die Lauffläche des Fahrsteigs verläuft, und einem Niveau des umgebenden Bodens möglichst gering sein. Somit ist insbesondere für diesen Anwendungsfall anzustreben, einen Fahrsteig mit besonders niedriger Bauhöhe einzusetzen.

Die Bauhöhe eines Fahrsteigs wird maßgeblich durch die Bauhöhe seiner Umlenkeinrichtungen und insbesondere durch einen Durchmesser der darin eingesetzten, in der Regel vertikal angeordneten Umlenkkettenräder bestimmt. Beim Einsatz von Umlenkkettenrädern mit sehr geringem Durchmesser kann es aufgrund der Tatsache, dass nicht beliebig schmale Paletten eingesetzt werden können, sondern die Paletten für den praktischen Einsatz eine Mindestlänge (gemessen in der Richtung des Verfahrwegs) aufweisen, zum Auftreten sogenannter Polygoneffekte kommen. Solche Polygoneffekte können spürbar auftreten, wenn die Länge der Paletten, und damit einhergehend auch ein Teilungsabstand der Förderkette, nicht ausreichend klein im Vergleich zum Durchmesser der Umlenkkettenräder sind. Zur Vermeidung von Polygoneffekten wurde daher bei herkömmlichen Fahrsteigen eine minimale Zähnezahl der Umlenkkettenräder von 17 Zähnen und damit eine Mindestbauhöhe im Regelfall nicht unterschritten.

In der WO 2013/152714 A1 wird ein Pallettenband zur Verwendung in einem Fördersystem, insbesondere einen Fahrsteig, beschrieben. Das beschriebene Palettenband weist zwei Förderketten und zwischen diesen angeordnete Paletten auf. Dieses Palettenband kann aufgrund seiner strukturellen Auslegung in gewissem Maße helfen, Polygoneffekte auch beim Einsatz kleiner Umlenkkettenräder zu begrenzen. Allerdings ist der strukturelle Aufbau des beschriebenen Pallettenbandes relativ fragil und weist eine Menge sicherheitsrelevanter Bauteile auf, die bei fehlerhafter Montage oder deren Versagen zu gefährlichen Situationen für die Benutzer führen könnten.

In der US 2013/180822 A1 wird ein Stufenband beschrieben, dessen Stufen ebenfalls zwischen zwei Förderketten angeordnet sind. Zudem weist das Stufenband ein mitlaufendes Sockelblech aus seitlich der Stufen angeordneten, beweglichen Blechelementen auf, die wie die Stufen auf den die Förderketten verbindenden Stufenachsen schwenkbar montiert sind.

Es kann unter anderem ein Bedarf an einem Verfahren zum Montieren einer Förderkette für ein Palettenband, an einem Verfahren zum Austauschen eines Elementes der Förderkette und/oder an einem Verfahren zum Montieren eines Palettenbandes bestehen, bei denen bzw. mithilfe derer bei der montierten Förderkette bzw. dem montierten Palettenband unter anderem einige der oben genannten Probleme bzw. Beschränkungen vorteilhaft überwunden sind. Insbesondere kann ein Bedarf an einem Verfahren zum Montieren einer Förderkette bzw. eines Palettenbandes bestehen, mithilfe derer in einfacher Weise und mit verhältnismäßig wenig Aufwand ein Palettenband montiert werden kann, welches mit hoher Betriebssicherheit in einem Fahrsteig geringer Bauhöhe eingesetzt werden kann, ohne dass hierdurch übermäßige Polygoneffekte provoziert würden.

Einem solchen Bedarf kann durch den Gegenstand gemäß einem der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird ein Verfahren zum Montieren einer Förderkette für ein Palettenband eines Fahrsteigs vorgeschlagen. Das Verfahren weist zumindest die folgenden Schritte, möglicherweise, aber nicht zwingend, in der angegebenen Reihenfolge, auf. Zum einen werden mehrere längliche Kettenglieder bereitgestellt, welche in einer Erstreckungsrichtung der Förderkette mit einem Ketten-Teilungsabstand hintereinander angeordnet sind. Jeweils zwei in der Erstreckungsrichtung benachbarte Kettenglieder sind hierbei in einem Gelenkbereich mittels eines Kettenbolzens miteinander auf Zug belastbar und quer zu der Erstreckungsrichtung um eine Mittellängsachse des Kettenbolzens verschwenkbar miteinander gekoppelt. Ferner werden mehrere längliche Anbindungselemente bereitgestellt, an welche Paletten befestigt werden können. Die Anbindungselemente werden in einem Kopplungsvorgang miteinander und mit den Kettengliedern gekoppelt, wobei:
- die Anbindungselemente parallel zu der Erstreckungsrichtung der Förderkette hintereinander angeordnet werden,
- jedes der Anbindungselemente an einem vorderen Ende mit einem zugehörigen ersten der Kettenbolzen welcher Kettenglieder koppelt, gekoppelt wird und an einem hinteren Ende mit einem zugehörigen zweiten der Kettenbolzen welcher Kettenglieder koppelt, gekoppelt wird, wobei ein Anbindungselement-Teilungsabstand zwischen dem ersten und dem zweiten Kettenbolzen ein ganzzahlig Vielfaches des Ketten-Teilungsabstandes ist; und
- die Anbindungselemente derart mit den Kettenbolzen gekoppelt werden, dass diese quer zu der Erstreckungsrichtung um die Mittellängsachsen der Kettenbolzen verschwenkt werden können.

In der Erfindung werden jeweils zwei in der Erstreckungsrichtung benachbarte Anbindungselemente einander überlappend angeordnet.

Hierbei wird ein hinteres Ende eines vorderen der beiden Anbindungselemente sowie ein vorderes Ende eines hinteren der beiden Anbindungselemente jeweils mit einem gemeinsamen Kettenbolzen gekoppelt.

In der Erfindung sind das vordere Ende jedes der Anbindungselemente mit dem jeweiligen ersten Kettenbolzen verschwenkbar und koaxial positioniert gekoppelt und das hintere Ende jedes der Anbindungselemente mit dem jeweiligen zweiten Kettenbolzen verschwenkbar und in der Erstreckungsrichtung über eine vorgegebene Distanz verlagerbar linear geführt gekoppelt. Hierbei werden zumindest eines der Anbindungselemente bei dem Kopplungsvorgang zunächst mit einem ersten der beiden Enden durch Aufschieben in axialer Richtung mit dem zugehörigen Kettenbolzen gekoppelt und anschließend durch Verschwenken in einer Verschwenkrichtung mit einem, dem ersten Ende entgegengesetzten zweiten Ende in tangentialer Richtung mit dem, diesem Ende zugehörigen Kettenbolzen gekoppelt.

Unter den Merkmalen Kopplung, koppeln, gekoppelt, wird in der vorliegenden Schrift eine Verbindung verstanden, die Relativbewegungen zwischen den gekoppelten Teilen ermöglicht, die jedoch nicht ohne zusätzlichen Aufwand eine Trennung der gekoppelten Teile zulässt. Ein solcher zusätzlicher Aufwand kann beispielsweise das Lösen einer Schraube, einer Mutter, eines Splintes, das Betätigen einer Schnappeinrichtung oder gar ein irreversibles zerstören eines koppelnden Bauteiles und dergleichen mehr sein, um die Kopplung der Teile aufzulösen.

Gemäß einem zweiten Aspekt der Erfindung wird ein Verfahren gemäß Anspruch 7 vorgeschlagen.

Gemäß einem dritten Aspekt der Erfindung wird ein Verfahren gemäß Anspruch 8 vorgeschlagen.

Die erfindungsgemäßen Verfahren ermöglichen eine strukturierte und sichere Montage von ineinandergreifenden und übergreifenden Elementen beziehungsweise Bauteile einer Förderkette beziehungsweise eines Palettenbandes. Durch diese ineinandergreifenden und übergreifenden Elemente kann eine hohe Betriebssicherheit gewährleistet werden. Die spezielle Ausgestaltung der ineinandergreifenden und übergreifenden Elemente erfordert auch ein strukturiertes Vorgehen beim Austausch von Elementen.

Kurz zusammengefasst können mögliche Merkmale und Vorteile von Ausführungsformen der Erfindung unter anderem und ohne die Erfindung einzuschränken als auf nachfolgend beschriebenen Ideen und Erkenntnissen beruhend angesehen werden.

Bei herkömmlichen Palettenbändern für Fahrsteige waren Paletten meist direkt an eventuell verlängerten Kettenbolzen der Förderketten angebunden. Meist wurden hierbei Förderketten mit einem verhältnismäßig großen Teilungsabstand eingesetzt, sodass die Länge der Paletten im Wesentlichen dem Teilungsabstand der Förderketten entsprach.

Sollte, wie beispielsweise bei dem in der WO 2013/152714 A1 beschriebenen Ansatz, durch Verwendung kurzer Kettenglieder bei den Förderketten ein kurzer Teilungsabstand realisiert werden, wurden die Paletten weiterhin direkt an den Kettenbolzen der Förderketten angebunden. Allerdings überspannte eine einzelne Palette die Länge mehrerer Kettenglieder, sodass zwischen einer Ankopplung der Palette an einem vorderen Kettenbolzen und einer Ankopplung der Palette an einem hinteren Kettenbolzen ein oder mehrere Kettenbolzen verblieben, die nicht mit der Palette verbunden waren.

Da es beim Umlenken der Förderkette an einem Umlenkkettenrad bei einer solchen Konfiguration zu einem Längenunterschied zwischen dem entlang des Umfangs des Umlenkkettenrads verlaufenden Bereichs der Förderkette einerseits und der sich dazwischen linear erstreckenden Palette kommt, muss dieser Längenunterschied durch eine geeignete Mechanik ausgeglichen werden. Herkömmlich wird diese Mechanik im Bereich der Anbindung der Paletten an einen oder mehrere der Kettenbolzen, mit denen die Paletten gekoppelt werden sollen, vorgesehen. Der Aufbau einer solchen Mechanik kann dabei komplex und/oder empfindlich sein. Außerdem kann es bei dieser Art der Anbindung der Paletten an die Förderketten aufwendig sein, dass Palettenband zu montieren und/oder beispielsweise im Rahmen eines Wartungsvorgangs zu demontieren und/oder beispielsweise defekte Teile des Palettenbandes zu ersetzen.

Ausführungsformen des hierin beschriebenen Montageverfahrens ermöglichen, eine strukturell und funktionell speziell ausgestaltete Förderkette in einer einfachen Weise montieren bzw. darin enthaltene Komponenten einfach demontieren oder austauschen zu können.

Bei der Förderkette werden hierbei die Paletten nicht direkt mit den Kettenbolzen der Förderkette verbunden. Stattdessen werden spezielle Anbindungselemente vorgesehen, an denen die Paletten befestigt werden können. Diese Anbindungselemente bilden hierbei eine Art parallel zu der jeweiligen Förderkette verlaufende zusätzliche Kette, wobei die Anbindungselemente um ein Vielfaches länger sind als die Kettenglieder der Förderkette, d.h. die aus den Anbindungselementen gebildete zusätzliche Kette weist einen größeren Teilungsabstand auf als die aus den Kettengliedern gebildete Kette. Anders ausgedrückt übergreift ein Anbindungselement mehrere Kettenglieder. Die Anbindungselemente sind dabei mit einigen der Kettenbolzen der Förderkette gekoppelt, die auch die Kettenglieder koppeln. Da die Anbindungselemente länger sind als die Kettenglieder der Förderketten, sind die gegenüberliegenden Enden der Anbindungselemente jeweils mit jedem zweiten, jeden dritten oder allgemeiner jedem n-ten (n > 2) Kettenbolzen gekoppelt, d.h., zwischen zwei mit einem Anbindungselement gekoppelten Kettenbolzen befindet sich zumindest ein Kettenbolzen, der nicht mit dem Anbindungselement gekoppelt ist.

Dabei sind die Anbindungselemente strukturell geeignet ausgebildet, um die beim Umlenken der Förderketten zwischen den kürzeren Kettengliedern der Förderketten und den im Vergleich hierzu längeren Anbindungselementen auftretenden Längenunterschiede kompensieren zu können. Hierdurch kann die Förderkette auch um Umlenkkettenräder kleinen Durchmessers umgelenkt werden, ohne dass Polygoneffekte unerwünschte Wirkungen hervorrufen könnten.

Indem die Paletten nicht direkt an den Kettenbolzen angebunden, sondern indirekt über die Anbindungselemente mit den Kettenbolzen verbunden sind, kann unter anderem erreicht werden, dass die Paletten und/oder andere Komponenten des Palettenbandes einfach montiert, demontiert bzw. ausgetauscht werden können.

Insbesondere können die Anbindungselemente derart ausgebildet sein, dass sie an ihrem zweiten Ende nicht notwendigerweise in axialer Richtung mit dem zugehörigen Kettenbolzen gekoppelt werden brauchen, sondern stattdessen verschwenkt und dabei in tangentialer Richtung mit dem zugehörigen Kettenbolzen gekoppelt werden können. Hierdurch können benachbarte Anbindungselemente, die mit ihren entgegengesetzten Enden an einem gemeinsamen Kettenbolzen angekoppelt sind, einzeln von dem jeweiligen Kettenbolzen gelöst werden.

Dementsprechend brauchen für den Fall, dass einzelne Anbindungselemente oder daran befestigte Paletten beispielsweise wegen Verschleißes ausgetauscht werden sollen, nicht alle Anbindungselemente von der durch die Kettenglieder gebildeten Kette gelöst werden. Stattdessen können zum Beispiel einzelne Anbindungselemente gelöst und ausgetauscht werden.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Es wird darauf hingewiesen, dass einige der möglichen Merkmale und Vorteile der Erfindung hierin mit Bezug auf unterschiedliche Ausführungsformen der Förderkette, des Palettenbandes oder des Fahrsteigs einerseits bzw. unterschiedliche Ausführungsformen eines Verfahrens zum Montieren einer Förderkette, eines Verfahrens zum Austauschen eines Anbindungselements in einer Förderkette oder eines Verfahrens zum Montieren eines Palettenbandes für einen Fahrsteig beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.
Fig. 1 zeigt eine grobschematische Längsschnittansicht durch einen Fahrsteig.
Fig. 2 zeigt eine perspektivische Ansicht eines Teils eines Palettenbandes für einen Fahrsteig mit einer Förderkette, welches gemäß einer Ausführungsform der vorliegenden Erfindung montiert wurde.
Fig. 3 zeigt eine weitere perspektivische Ansicht eines Teils des in Fig. 1 dargestellten Förderbandes teilweise in Explosionsansicht.
Fig. 4a-c zeigen einen Teilabschnitt einer Förderkette, welche gemäß einer Ausführungsform der vorliegenden Erfindung zu montieren ist, als perspektivische Explosionsansicht, als perspektivische Frontansicht bzw. als perspektivische Rückansicht.

Die Figuren sind lediglich schematisch und nicht maßstabsgetreu. Gleiche Bezugszeichen bezeichnen in den verschiedenen Figuren gleiche oder gleichwirkende Merkmale.

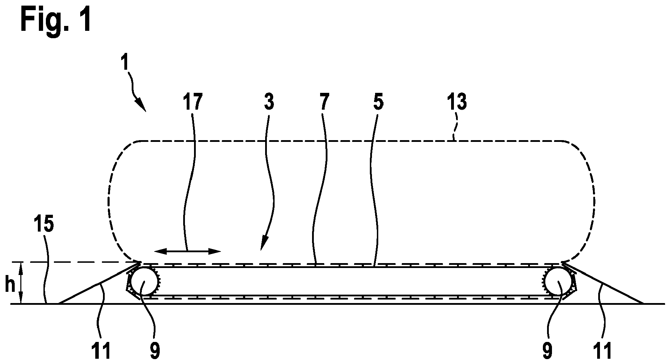

Um die Verfahrensschritte des erfindungsgemäßen Montageverfahrens besser verstehen zu können, werden zunächst die verschiedenen Bauteile des dem Montageverfahren zugrundeliegenden Palettenbandes 3 sowie deren Anordnung zueinander, anhand der Figuren 1 bis 4c beschrieben.

In Fig. 1 ist grob schematisch ein Fahrsteig 1 dargestellt, mithilfe dessen Passagiere entlang eines horizontalen Verfahrwegs transportiert werden können. Der Fahrsteig 1 verfügt über ein Palettenband 3, dessen betretbarer, nach oben gerichteter Anteil sich entlang des Verfahrwegs in einer Erstreckungsrichtung 17 erstreckt. Dieser betretbare Anteil des Palettenbandes 3 wird im Betrieb des Fahrsteigs 1 in einer Vorlaufrichtung bewegt. Das Palettenband 3 ist ringförmig geschlossen beziehungsweise umlaufend angeordnet und wird an gegenüberliegenden Enden des Fahrsteigs 1 mithilfe von Umlenkkettenrädern 9 umgelenkt, sodass ein nach unten gerichteter Anteil des Palettenbandes in einer Rücklaufrichtung zurückbewegt wird. Um das Palettenband 3 einfach und stufenfrei betreten zu können, sind in einem Eingangsbereich sowie in einem Ausgangsbereich jeweils schräge Rampen 11 vorgesehen. Ferner ist entlang des Verfahrwegs ein Handlauf 13 angeordnet, der aus Übersichtlichkeitsgründen lediglich mit unterbrochener Linie dargestellt ist.

Das Palettenband 3 besteht im Wesentlichen aus zwei Förderketten 5 sowie mehreren an diesen Förderketten 5 gehaltenen Paletten 7. Die Förderketten 5 sind dabei parallel zueinander und bezogen auf eine Breitenrichtung (senkrecht zur Bildebene) des Fahrsteigs 1 an gegenüberliegenden Seiten des Fahrsteigs 1 angeordnet. Jede Förderkette 5 ist aus einer Vielzahl von Kettengliedern zusammengesetzt, welche mithilfe von Kettenbolzen schwenkbar miteinander gekoppelt sind. Die Paletten 7 sind mechanisch mit den beiden Förderketten 5 verbunden, so dass durch ein Bewegen der Förderketten 5 auch die Paletten 7 entlang des Verfahrwegs bewegt werden.

Im dargestellten Beispiel ist der Fahrsteig 1 auf einem Boden 15 aufgebaut. Dabei sollte eine Bauhöhe h möglichst gering sein, beispielsweise um eine Länge bzw. Neigung der Rampen 11 zu begrenzen. Aufgrund einer solchen angestrebten geringen Bauhöhe h sollte auch der Durchmesser der Umlenkkettenräder 9 möglichst klein sein.

Bei herkömmlichen Fahrsteigen entspricht eine Länge der die Förderkette bildenden Kettenglieder, gemessen entlang der Erstreckungsrichtung, im Wesentlichen einer Länge der Paletten. Anders ausgedrückt entspricht ein Teilungsabstand der herkömmlichen Förderkette im Wesentlichen einem Teilungsabstand des damit gebildeten herkömmlichen Palettenbandes. Auf diese Weise ist eine Palette an ihrem vorderen und ihrem hinteren Ende jeweils mit einem der Kettenbolzen an den entgegengesetzten Enden des zu der Palette 7 parallel verlaufenden Kettengliedes verbunden.

Beim Umlenken der relativ langen Kettenglieder einschließlich der darin angebundenen Paletten 7 kann es jedoch zu spürbaren Polygoneffekten kommen, wenn der Teilungsabstand der Förderkette 5 bzw. des Palettenbandes 3 nicht erheblich kleiner ist als ein Durchmesser der Umlenkkettenräder 9. Insbesondere wurde erkannt, dass bei Umlenkkettenrädern 9, die als Zahnräder ausgebildet sind und bei denen ein Zahn jeweils in eine in einem Kettenglied gebildete Ausnehmung eingreifen soll, spürbare Polygoneffekte auftreten, sofern das Umlenkkettenrad 9 weniger als 17 Zähne aufweist.

Die vorliegende Erfindung betrifft einen Fahrsteig 1 und dessen Komponenten, wie insbesondere das Palettenband 3 und die Förderkette 5, bzw. ein Verfahren zum Montieren oder Reparieren solcher Komponenten, bei denen der Fahrsteig 1 aufgrund seiner strukturellen und funktionalen Eigenschaften mit einer geringen Bauhöhe h bereitgestellt werden kann, ohne dass sich beim Umlenken des Palettenbandes 3 inakzeptable starke Polygoneffekte einstellen. Ferner erhöht die vorliegende Erfindung aufgrund ihrer spezifischen strukturellen Ausprägungen die Betriebssicherheit des Fahrsteiges 1. Außerdem lassen sich die Förderkette 5 bzw. das damit gebildete Palettenband 3 einfach montieren und darin enthaltene Bauteile bei Bedarf einfach austauschen.

Nachfolgend werden mögliche Details und Vorteile von Ausführungsformen der vorliegenden Erfindung unter Bezugnahme auf die Figuren beschrieben. Dabei wird zunächst hauptsächlich auf strukturelle bzw. funktionelle Eigenschaften der Förderkette 5, des damit ausgebildeten Palettenbandes 3 oder des hiermit letztlich bereitgestellten Fahrsteigs 1 eingegangen. Anschließend wird auf mögliche Ausgestaltungen eines Verfahrens zum Montieren einer solchen Förderkette 5 bzw. eines solchen Palettenbandes 3 sowie auf ein Verfahren zum Austauschen von Anbindungselementen in einer solchen Förderkette 5 eingegangen.

Es wird darauf hingewiesen, dass Merkmale, die für Vorrichtungen, wie die Förderkette 5, das Palettenband 3 oder den Fahrsteig 1, beschrieben sind, entsprechende Auswirkungen auf die jeweiligen Verfahren zu deren Montage bzw. Reparatur haben können und umgekehrt Merkmale der hierin beschriebenen Verfahren wiederum mit Eigenschaften der dadurch gebildeten Vorrichtungen korrelieren können.

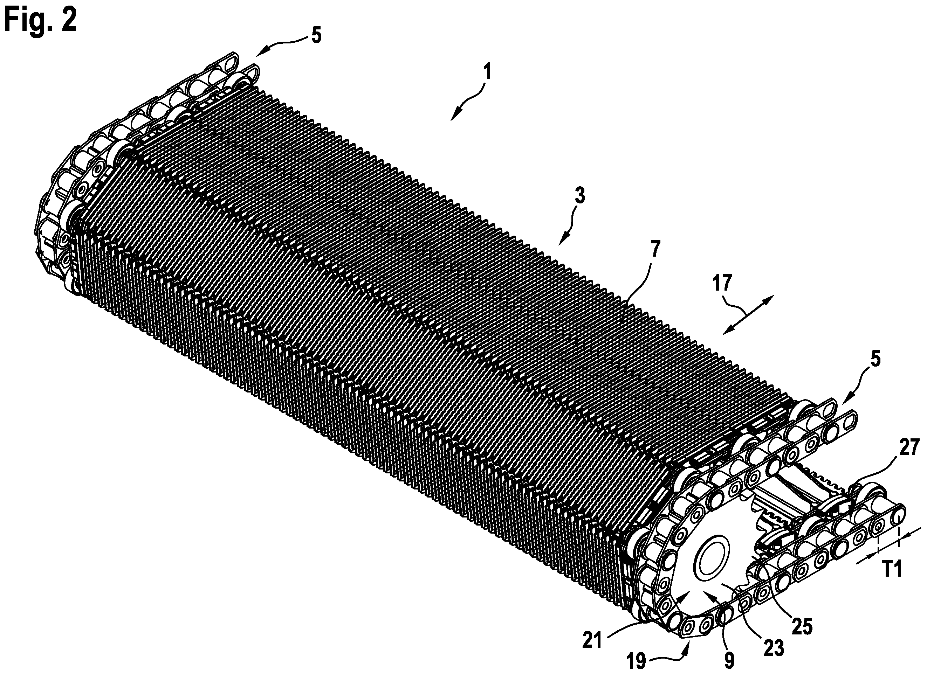

In Fig. 2 ist ein Teil eines Fahrsteigs 1 in einem Umlenkbereich 19 perspektivisch dargestellt. Das Palettenband 3 wird in dem Umlenkbereich 19 mittels einer Umlenkeinrichtung 21 von einer Vorlaufrichtung in eine Rücklaufrichtung oder umgekehrt umgelenkt. Die Umlenkeinrichtung 21 verfügt hierzu über Umlenkkettenräder 9 in Form von Zahnrädern 23, welche an gegenüberliegenden Seiten des Palettenbandes 3 angeordnet sind und mit dort verlaufenden Förderketten 5 zusammenwirken. Die Umlenkkettenräder 9 weisen einen kleinen Durchmesser von beispielsweise weniger als 40 cm, vorzugsweise weniger als 30 cm und stärker bevorzugt weniger als 25 cm auf, so dass der gesamte Fahrsteig 1 eine geringe Bauhöhe h von beispielsweise deutlich unter 50 cm, vorzugsweise sogar unter 35 cm, aufweisen kann.

Da ein Ketten-Teilungsabstand T1 bei den Förderketten 5 jedoch kurz ist, können die an dem Zahnrad 23 ausgebildeten Zähne 25, die in einzelne Kettenglieder 27 der Förderkette 5 eingreifen, eng benachbart zueinander angeordnet sein. Dementsprechend können auch bei dem kleinen Umlenkkettenrad 9 wenigstens 17 Zähne 25 am Außenumfang vorgesehen sein, so dass Polygoneffekte beim Umlaufen der Förderketten 5 vernachlässigbar bleiben können.

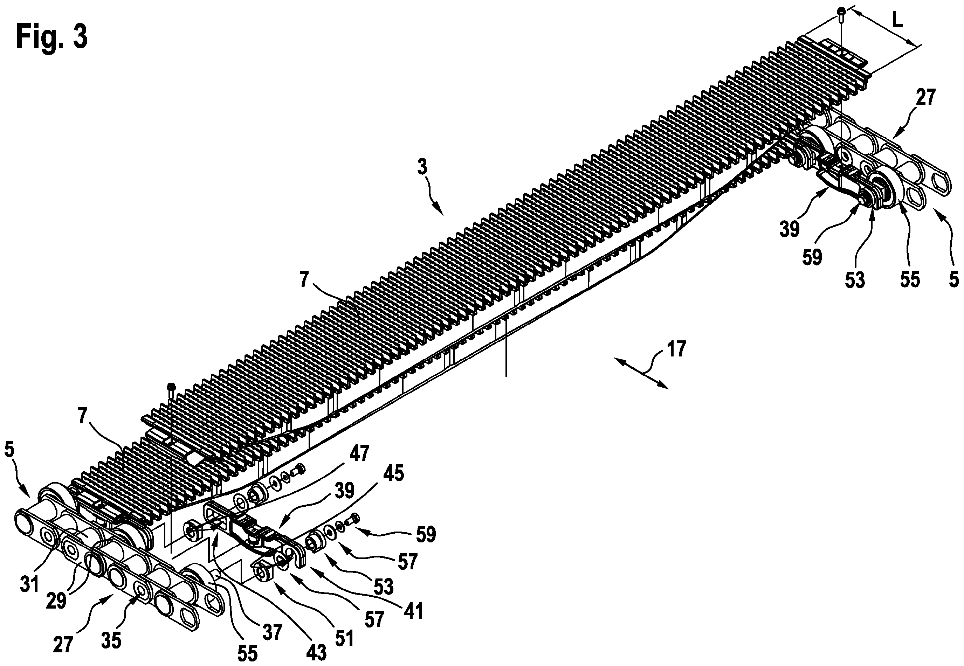

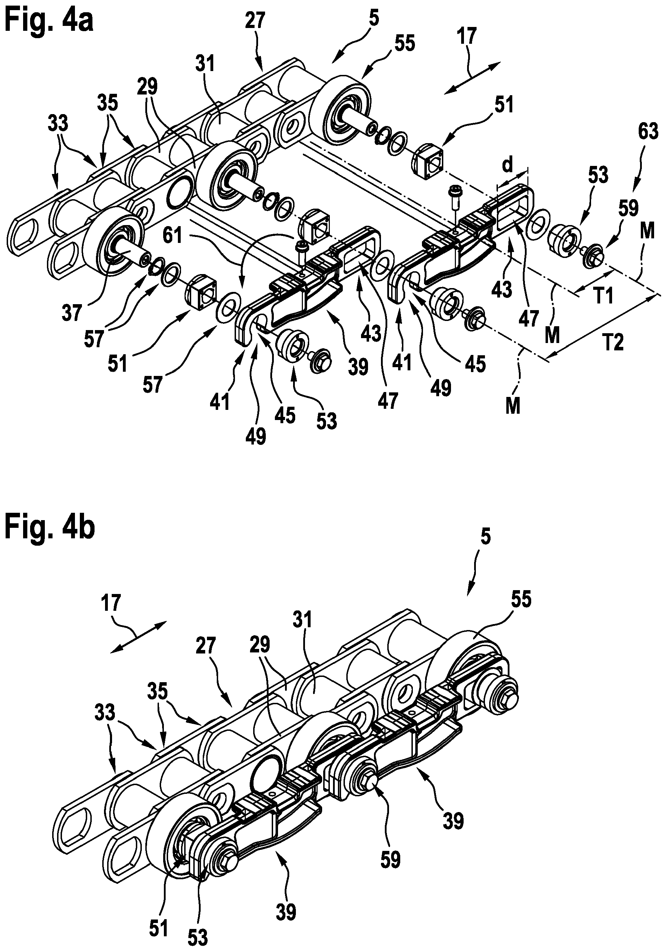

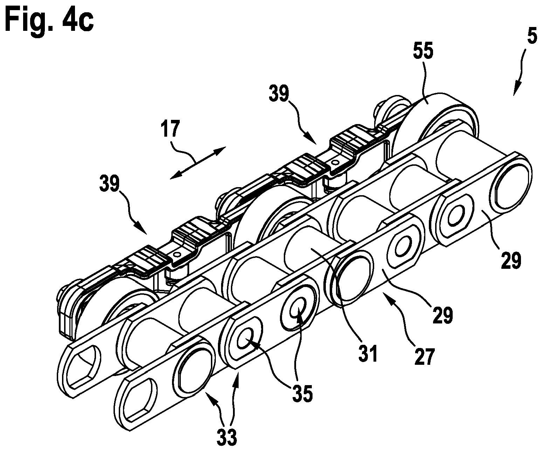

In den Fig. 3 und 4a bis 4c sind Details des Palettenbandes 3 sowie der darin eingesetzten Förderkette 5 perspektivisch dargestellt, teilweise in Explosionsansichten. Nachfolgend werden diese gemeinsam beschrieben.

Die Förderkette 5 weist mehrere längliche Kettenglieder 27 auf. Die Kettenglieder 27 sind entlang der Erstreckungsrichtung 17 der Förderkette 5 hintereinander angeordnet. Jedes Kettenglied 27 ist im dargestellten Beispiel (siehe insbesondere Fig. 4a) mit zwei parallel angeordneten, blechartigen Laschen 29 ausgebildet. Die Laschen 29 sind über Hülsen 31 voneinander beabstandet. In der Erstreckungsrichtung 17 benachbarte Kettenglieder 27 sind jeweils in einem Gelenkbereich 33 mittels eines Kettenbolzens 35 miteinander verbunden. Die Förderkette 5 ist hierdurch auf Zug hochbelastbar und quer zu der Erstreckungsrichtung 17 um jeweilige Mittellängsachsen M der Kettenbolzen 35 verschwenkbar.

Ein Abstand der Mittellängsachsen M zwischen zwei benachbarten Kettenbolzen 35 an der Förderkette 5 entspricht dem Ketten-Teilungsabstand T1. Um die gewünschten vernachlässigbaren Polygoneffekte beim Umlenken der Förderkette 5 zu erreichen, sind die einzelnen Kettenglieder 27 der Förderkette 5 so kurz, dass der Ketten-Teilungsabstand T1 vorzugsweise kürzer als 10 cm, stärker bevorzugt kürzer als 6 cm und insbesondere 50 mm ± 2 mm, beträgt.

Bei herkömmlichen Palettenbändern 3 sind die Paletten 7 meist direkt mit den Kettenbolzen 35 der Förderketten 5 verbunden. Beispielsweise sind die Paletten 7 an seitlichen Stirnflächen direkt mit über die Förderketten 5 seitlich überstehenden, verlängerten Kettenbolzen 35 verbunden.

Im Gegensatz hierzu sind bei dem hierin vorgeschlagenen Palettenband 3 an der Förderkette 5 zusätzliche längliche Anbindungselemente 39 vorgesehen. Die Anbindungselemente 39 sind ähnlich wie die Kettenglieder 27 in der Erstreckungsrichtung 17 bzw. parallel zu dieser hintereinander angeordnet. Jeweils zwei in der Erstreckungsrichtung 17 benachbarte Anbindungselemente 39 sind hierbei quer zur Erstreckungsrichtung 17 schwenkbar miteinander gekoppelt. Eine solche Kopplung kann beispielsweise über verlängerte Kettenbolzen 37 der Förderkette 5 erfolgen, die seitlich über die Kettenglieder 27 überstehen und mit denen die Anbindungselemente 39 verbunden werden können.

Insbesondere kann jedes der Anbindungselemente 39 an einem vorderen Ende 41 mit einem zugeordneten ersten der verlängerten Kettenbolzen 37 gekoppelt sein und an einem hinteren Ende 43 mit einem zugeordneten zweiten der verlängerten Kettenbolzen 37 gekoppelt sein.

Ein Abstand in Erstreckungsrichtung 17 zwischen den Mittellängsachsen M des ersten und des zweiten verlängerten Kettenbolzens 37 wird hierin als Anbindungselement-Teilungsabstand T2 bezeichnet. Bei der hierin beschriebenen Förderkette 5 soll dieser Anbindungselement-Teilungsabstand T2 ein ganzzahlig Vielfaches des Ketten-Teilungsabstandes T1 sein, das heißt T2 = n * T1 mit n = 2, 3, 4, .... Im dargestellten Beispiel ist der Anbindungselement-Teilungsabstand T2 das Dreifache des Ketten-Teilungsabstandes, das heißt T2 = 3 * T1. Mit anderen Worten sollen die Anbindungselemente 39 in etwa um ein ganzzahlig Vielfaches, das heißt beispielsweise um das Doppelte oder das Dreifache, länger sein als die Kettenglieder 27.

Hierdurch ergibt sich, dass jedes der Anbindungselemente 39 an seinen entgegengesetzten Enden 41, 43 nicht an direkt benachbarten der Kettenbolzen 35, 37 angebunden ist. Stattdessen befindet sich zwischen zwei Kettenbolzen 35, 37, an denen eines der jeweiligen Enden 41, 43 des Anbindungselements 39 angebunden ist, zumindest ein Kettenbolzen 35, 37, der nicht mit dem Anbindungselement 39 gekoppelt ist. Anders ausgedrückt ist jedes der Anbindungselemente 39 nur mit jedem zweiten, jedem dritten oder allgemein jedem n-ten der Kettenbolzen 35, 37 gekoppelt.

Im dargestellten Beispiel sind die Anbindungselemente 39 an ihren Enden 41, 43 mit jedem dritten der Kettenbolzen 35, 37 gekoppelt, wobei diese Kettenbolzen 35, 37 dann als verlängerte Kettenbolzen 37 ausgeführt sind. Zwischen solchen verlängerten Kettenbolzen 37 befinden sich jeweils zwei kürzere Kettenbolzen 35, die lediglich die Kettenglieder 27 der Förderkette 5 verbinden, nicht aber mit dem hierzu parallelen verlaufenden Anbindungselement 39 verbunden sind.

Bei dem beschriebenen Palettenband 3 sind die Paletten 7 nicht direkt mit der Förderkette 5 verbunden. Stattdessen sind die Paletten 7 jeweils an den Anbindungselementen 39 angebracht und indirekt über diese Anbindungselemente 39 mit der Förderkette 5 verbunden.

Eine Länge L der Paletten 7, gemessen in der Erstreckungsrichtung 17, kann dabei in etwa dem Anbindungselement-Teilungsabstand T2 entsprechen und somit um ein Vielfaches länger sein als die Länge der Kettenglieder 27 und deren Ketten-Teilungsabstand T1. Im Allgemeinen sind die Paletten 7 hierbei geringfügig kürzer als der Anbindungselement-Teilungsabstand T2, damit zwischen benachbarten Paletten 7 ein kleiner Spalt verbleibt und sich die Paletten 7 somit relativ zu einander verschieben können. Konkret kann beispielsweise für eine Förderkette 5 mit einem Ketten-Teilungsabstand T1 von 50 mm eine Palettenlänge von knapp 150 mm eingesetzt werden, so dass jede der Paletten 7 mehrere Kettenglieder 27 überspannt bzw. "übergreift".

Beim Umlenken eines solchen Palettenbandes 3 in einem Umlenkbereich 19 fährt die Förderkette 5 mit ihren Kettengliedern 27 dann gewissermaßen ein Bogenmaß eines Teilkreises entlang des Außenumfangs eines der Umlenkkettenräder 9 ab. Die langen Paletten 7 hingegen erstrecken sich entlang von Sehnen zwischen den von ihnen übergriffenen Kettengliedern 27. Anders ausgedrückt erstrecken sich die Paletten 7 nicht entlang des beim Umlenken von den Kettenbolzen 35, 37 definierten Polygonzuges, sondern entlang gerader Linien, die diejenigen der Kettenbolzen 35, 37 verbinden, an denen die Anbindungselemente 39 angebunden sind. Die Länge dieser Sehnen ist kürzer als die Länge des Umfangs bzw. des genannten Polygonzuges. Dies kann als Sehnenverkürzung bezeichnet werden.

Um auftretende Sehnenverkürzungen aufgrund der im Vergleich zu den Kettengliedern 27 längeren Anbindungselemente 39 kompensieren zu können, ist eine spezielle Ausgestaltung der Anbindungselemente 39 bzw. der Art und Weise, wie diese an die Förderkette 5 angebunden sind, notwendig. Insbesondere sollte zumindest eines der Enden 41, 43 jedes Anbindungselements 39 derart an die Förderkette 5 gekoppelt sein, dass ein Längenausgleich zur Kompensierung der Sehnenverkürzung geschaffen werden kann.

Zum besseren Verständnis werden nachfolgend die mit einem spezifischen Anbindungselement 39 beschriebenen, verlängerten Kettenbolzen 37 als zugeordnete Kettenbolzen 37 bezeichnet. Ferner sind die verlängerten Kettenbolzen 37, die mit einem bestimmten Bereich des Anbindungselementes zusammenwirken, als erster der Kettenbolzen 37 und zweiter der Kettenbolzen 37 beziehungsweise als erster Kettenbolzen 37 und zweiter Kettenbolzen 37 bezeichnet, um deren Anordnung in Bezug auf das zugeordnete Anbindungselement 39 beschreiben zu können. Die Enden des Anbindungselementes 39 werden aus demselben Grund als vorderes Ende 41 und hinteres Ende 43 bezeichnet, wobei diese Bezeichnungen keine Bewegungsrichtung des Anbindungselementes 39 in der Erstreckungsrichtung vorgeben sollen.

Um die Sehnenverkürzung zu kompensieren, kann beispielsweise das vordere Ende 41 eines Anbindungselements 39 schwenkbar und koaxial positioniert mit dem ersten Kettenbolzen 37 gekoppelt sein.

Anders ausgedrückt kann das vordere Ende 41 des Anbindungselements 39 mit dem ersten Kettenbolzen 37 derart gekoppelt sein, dass das Anbindungselement 39 um die Mittellängsachse M des ersten Kettenbolzens 37 verschwenkbar ist, aber in Richtungen quer zur Mittellängsachse M des Kettenbolzens 37 relativ zu dem Kettenbolzen 37 positionsgebunden ist. Das vordere Ende 41 des Anbindungselements 39 ist somit zwar um die Mittellängsachse M des Kettenbolzens 37 schwenkbar mit der Förderkette 5 verbunden, kann jedoch relativ zu dieser nicht linear verlagert werden. Anders ausgedrückt kann das Anbindungselement 39 an seinem vorderen Ende 41 derart formschlüssig mit dem ersten Kettenbolzen 37 verbunden sein, dass lediglich Schwenkbewegungen um die Mittellängsachse M des Kettenbolzens 37 möglich sind, jedoch keine translatorischen Bewegungen in der Erstreckungsrichtung 17 relativ zu dem Kettenbolzen 37 zugelassen werden.

Im Gegensatz hierzu kann das hintere Ende 43 jedes der Anbindungselemente 39 sowohl schwenkbar als auch in der Erstreckungsrichtung 17 über eine vorgegebene Distanz d verlagerbar linear geführt mit dem zweiten Kettenbolzen 37 gekoppelt sein.

Anders ausgedrückt kann das hintere Ende 43 des Anbindungselements 39 mit dem zweiten Kettenbolzen 37 derart gekoppelt sein, dass das Anbindungselement 39 um die Mittellängsachse M des zweiten Kettenbolzens 37 verschwenkbar ist und zusätzlich in einer Richtung quer zu dieser Mittellängsachse M relativ zu dem Kettenbolzen 37 über die vorgegebene Distanz d verlagerbar ist und dabei aufgrund der Ausgestaltung der Kopplung zwischen dem Anbindungselement 39 und dem zweiten Kettenbolzen 37 in seiner linearen Bewegung geführt ist. Nochmals anders ausgedrückt kann die Anbindung des hinteren Endes 43 des Anbindungselements 39 an den zweiten Kettenbolzen 37 derart ausgestaltet sein, dass sich dieses hintere Ende 43 in der Richtung quer zu der Mittellängsachse M des Kettenbolzens 37 translatorisch relativ zu dem zweiten Kettenbolzen 37 bewegen kann.

Dabei soll eine lineare Bewegung über die Distanz d zulässig sein. Diese Distanz d kann der Länge der oben genannten Sehnenverkürzung entsprechen oder größer als diese sein. Anders ausgedrückt kann die Distanz d derjenigen Länge entsprechen, um die sich die Sehne zwischen dem ersten und dem zweiten Kettenbolzen 37 vom Umfang entlang eines Kreissegments unterscheidet, wenn die Förderkette 5 um das Kreissegment umgelenkt wird. Beispielsweise kann die Distanz d wenigstens 150% oder vorzugsweise wenigstens 200% des Durchmessers des zweiten Kettenbolzens 37 entsprechen.

Mit den hierin beschriebenen Anbindungselementen 39 und deren Anbindung an die Förderkette 5 wird gewissermaßen eine parallele Kette geschaffen, deren Teilungsabstand wesentlich größer als derjenige der Kettenglieder 27 ist und im Wesentlichen der Länge der Paletten 7 entspricht. Aufgrund der strukturellen und funktionalen Ausgestaltung der Anbindungselemente 39 an ihren ersten und zweiten Enden 41, 43 und der Art, wie diese Enden mit den Kettenbolzen 37 der Förderkette 5 gekoppelt sind, kann erreicht werden, dass eine Sehnenverkürzung, wie sie beim Umlenken des Palettenbandes 3 bewirkt wird, an den Anbindungselementen 39 kompensiert werden kann.

Gemäß einer Ausführungsform kann jedes der Anbindungselemente 39 an zumindest einem seiner Enden 41, 43 in einer Richtung quer zu der Erstreckungsrichtung 17 und quer zu der Mittellängsachse M desjenigen Kettenbolzens 37, mit dem das jeweilige Ende 41, 43 gekoppelt ist, lösbar mit dem zugeordneten Kettenbolzen 37 gekoppelt sein Mit anderen Worten können die Anbindungselemente 39 derart ausgestaltet sein, dass sie an einem ihrer Enden von dem zugeordneten, verlängerten Kettenbolzen 37 gelöst werden können, indem dieses Ende 41, 43 in der Richtung quer zu der Erstreckungsrichtung 17 und quer zu der Mittellängsachse M des Kettenbolzens 37 verlagert wird. Anders ausgedrückt sollte eines der Enden 41, 43 des Anbindungselements 39 strukturell derart ausgestaltet sein, dass das Anbindungselement 39 aus der Erstreckungsrichtung 17 heraus nach oben oder unten verschwenkt werden kann und dabei von dem zugeordneten Kettenbolzen 37 gelöst werden kann.

Durch eine solche insbesondere durch ein Verschwenken des Anbindungselements 39 bewirkbare Lösbarkeit von dem zugeordneten Kettenbolzen 37 kann das Anbindungselement 39 zumindest an dem betreffenden Ende 41, 43 aus der Kopplung mit der Förderkette 5 gelöst werden, ohne dass das Anbindungselement 39 in axialer Richtung von dem zugeordneten Kettenbolzen 35 abgezogen werden müsste. Wie weiter unten detaillierter dargestellt, kann sich hierdurch eine einfache Möglichkeit realisieren lassen, die hierin vorgestellte Förderkette 5 mitsamt den daran angeordneten Anbindungselementen 39 in einfacher Weise montieren bzw. demontieren zu können oder einzelne Anbindungselemente 39 austauschen zu können.

Gemäß einer Ausführungsform weist das Anbindungselement 39 am vorderen und am hinteren Ende 41, 43 jeweils eine Durchgangsöffnung 45, 47 auf, durch die hindurch sich im mit dem jeweils zugeordneten Kettenbolzen 37 gekoppelten Zustand der jeweilige Kettenbolzen 37 erstreckt. Dabei weist das Anbindungselement 39 an einer dieser Durchgangsöffnungen 45 eine seitliche Öffnung 49 derart auf, dass nach dem Entfernen einer Buchse 53 der zugehörige Kettenbolzen 37 aus der Durchgangsöffnung 45, 47 heraus durch die seitliche Öffnung 49 heraus bewegt und dadurch aus der Kopplung mit dem zugeordneten Kettenbolzen 37 gelöst werden kann.

Mit anderen Worten sollen an den gegenüberliegenden Enden 41, 43 des Anbindungselements 39 jeweils Durchgangsöffnungen 45, 47 ausgebildet sein, durch welche sich die vorzugsweise verlängerten Kettenbolzen 37 hindurch erstrecken können. Diese Durchgangsöffnungen 45, 47 können derart dimensioniert sein, dass es beispielsweise bei der vorderen Durchgangsöffnung 45 zu einem teilweisen Formschluss mit dem zylinderförmigen verlängerten Kettenbolzen 37 kommt. Dementsprechend kann die vordere Durchgangsöffnung 45 zumindest bereichsweise rund und mit in etwa dem gleichen Durchmesser wie der Durchmesser des verlängerten Kettenbolzens 37 ausgestaltet sein. Die hintere Durchgangsöffnung 47 in dem Anbindungselement 39 kann vorzugsweise länglich ausgestaltet sein, beispielsweise rechteckförmig oder quasirechteckförmig. Eine Länge dieser hinteren Durchgangsöffnung 47 in Erstreckungsrichtung 17 kann dabei der Distanz d entsprechen, um die sich das Anbindungselement 39 relativ zu dem zugeordneten Kettenbolzen 35 verlagern können soll. Eine Höhe dieser hinteren Durchgangsöffnung 47 kann in etwa dem Durchmesser des zugeordneten Kettenbolzens 35 entsprechen.

Dabei kann zumindest eine der beiden Durchgangsöffnungen 45, 47 nicht ringförmig geschlossen sein, sondern an einer Seite offen sein. Anders ausgedrückt kann ein Ende 41, 43 des Anbindungselements 39 mit einer Durchgangsöffnung 45 in Form eines seitlich offenen, weitgehend runden Auges ausgestaltet sein. Aufgrund der seitlichen Öffnung 49 kann diese Durchgangsöffnung 45 beispielsweise U-förmig oder Ω-förmig geöffnet sein.

Durch die seitliche Öffnung 49 an der Durchgangsöffnung 45 kann die weiter oben beschriebene Lösbarkeit des Anbindungselements 39 durch ein Verschwenken des Anbindungselements 39 erreicht werden. Beispielsweise kann zum Montieren eines Anbindungselements 39 sein hinteres Ende 43 axial auf den zugeordneten Kettenbolzen 37 aufgeschoben werden und anschließend das vordere Ende 41 mit dem anderen zugeordneten Kettenbolzen 37 gekoppelt werden, indem das Anbindungselement 39 nach unten geschwenkt wird und dabei der zugehörige Kettenbolzen 37 durch die seitliche Öffnung 49 hindurch in die Durchgangsöffnung 45 gelangt, um die gewünschte Kopplung zwischen der aus Kettenglieder 27 gebildeten Kette und dem Anbindungselement 39 zu bewirken.

Gemäß einer Ausführungsform können dabei benachbarte Anbindungselemente 39 einander in der Erstreckungsrichtung 17 überlappen und das hintere Ende 43 eines vorderen Anbindungselements 39 sowie das vordere Ende 41 eines hinteren Anbindungselements 39 jeweils mit einem gemeinsamen Kettenbolzen 37 gekoppelt sein.

Mit anderen Worten können sich die Anbindungselemente 39 der hierin beschriebenen Förderkette 5 ähnlich wie die Laschen 29 der Kettenglieder 27 in Erstreckungsrichtung 17 überlappen und benachbarte Anbindungselemente 39 jeweils mit einem ihrer Enden 41, 43 an einem gemeinsamen Kettenbolzen 37 angekoppelt sein.

Alle Anbindungselemente 39 der Förderkette 5 können hierbei vorzugsweise identisch ausgebildet sein, d.h. eine gleiche Geometrie aufweisen. Die durch die Anbindungselemente 39 ausgebildete Kette kann somit einfach aufgebaut sein und es braucht lediglich ein Typ von Anbindungselementen 39 produziert, gelagert und letztendlich montiert werden. Für die beiden parallel zueinander verlaufenden und einander gegenüberliegenden Förderketten 5 eines Palettenbandes 3 können zwei spiegelsymmetrisch ausgebildete Typen von Anbindungselementen 39 (rechts/links) erforderlich sein.

Beispielsweise können die Anbindungselemente 39 als gekröpfte Glieder ausgeformt sein, so dass beispielsweise alle hinteren Enden 43 der Anbindungselemente 39 an den zugeordneten Kettenbolzen 37 näher zu den Kettengliedern 27 angeordnet sind als die an demselben Kettenbolzen 37 angeordneten vorderen Enden 41 benachbarter Anbindungselemente 39.

In einer solchen Konfiguration können die hinteren Enden 43 der Anbindungselemente 39 zur Montage der Förderkette 5 mit der ringförmig geschlossenen Durchgangsöffnung 47 axial über einen zugeordneten Kettenbolzen 37 geschoben werden. Nachdem alle Anbindungselemente 39 auf diese Weise an den zugeordneten Kettenbolzen 37 angebracht wurden, können die Kopplungsbolzen 39 dann verschwenkt werden, um mit ihrem vorderen Ende 41 in einen benachbarten verlängerten Kettenbolzen 37 eingreifen zu können. Auf diese Weise können die Anbindungselemente 39, obwohl sie in der Erstreckungsrichtung einander überlappen, quasi zu einer Kette parallel zu den Kettengliedern 27 an der Förderkette 5 montiert werden.

Gemäß einer Ausführungsform kann das hintere Ende 43 der Anbindungselemente 39 jeweils über ein Gleitelement 51 an dem zugeordneten Kettenbolzen 35, 37 gehalten sein. Das Gleitelement 51 kann dabei zwischen einander gegenüberliegenden Oberflächen des Anbindungselements 39 einerseits und des Kettenbolzens 37 andererseits zwischengelagert sein.

Mit anderen Worten können die Anbindungselemente 39 jeweils an ihrem hinteren Ende 43 über das Gleitelement 51 mit dem zugeordneten Kettenbolzen 37 gekoppelt sein. Das Gleitelement 51 kann dabei in bestimmten Richtungen für einen gewünschten Kraftschluss oder in bestimmten Richtungen für einen bestimmten Formschluss zwischen dem verlängerten Kettenbolzen 37 einerseits und beispielsweise Innenoberflächen im Bereich der Durchgangsöffnung 47 in dem Anbindungselement 39 sorgen.

Gemäß einer konkreten Ausführungsform kann dabei das Anbindungselement 39 an seinem hinteren Ende 43 eine Langloch-artig ausgeführte Durchgangsöffnung 47 mit zueinander parallelen Innenoberflächen aufweisen. Das Gleitelement 51 kann dann eine Außenkontur mit zueinander parallelen und an die Innenoberflächen der Durchgangsöffnung 47 angrenzenden Außenflächen aufweisen.

Anders ausgedrückt kann das Gleitelement 51 beispielsweise eine rechteckige oder quasirechteckige Außenkontur aufweisen und die Durchgangsöffnung 47 in dem hinteren Ende 43 des Anbindungselements 39 kann ebenfalls rechteckig bzw. quasi-rechteckig sein. Eine Höhe des Gleitelements 51 kann dabei einer Höhe der Durchgangsöffnung 47 entsprechen. Eine Länge des Gleitelements 51 sollte jedoch kürzer als eine Länge der Durchgangsöffnung 47 sein. Beispielsweise kann die Länge des Gleitelements 51 weniger als 50% oder weniger als 30% der Länge der Durchgangsöffnung betragen. Durch eine solche Ausgestaltung kann das Gleitelement 51 sich linear innerhalb der Durchgangsöffnung 47 bewegen, beispielsweise um die oben beschriebene Distanz d. Mit anderen Worten kann das Gleitelement 51 als Vierkant-Bauteil ausgebildet sein und mit der in dem Anbindungselement 39 als Langloch ausgebildeten Durchgangsöffnung 47 eine Linearführung bilden.

Anders ausgedrückt kann durch die Ausgestaltung des Gleitelements 51 und der Durchgangsöffnung 47 eine lineare Führung für das Anbindungselement 39 bewirkt werden, um bei einem Umlenken der Förderkette 5 die auftretende Sehnenverkürzung kompensieren zu können.

Aufgrund der Ausgestaltung des Gleitelements 51 und der Durchgangsöffnung 47 mit zueinander parallelen Oberflächen kann dabei eine Kontaktfläche, an der das Gleitelement 51 die Innenoberfläche der Durchgangsöffnung 47 an dem Anbindungselement 39 kontaktiert, vergrößert werden. Auf diese Weise kann eine Flächenpressung bei der Anbindung des Anbindungselements 39 an dem zugeordneten Kettenbolzen 37 verringert werden. Hierdurch lässt sich beispielsweise Verschleiß an der Förderkette 5 reduzieren.

Wie bereits beschrieben, ist das vordere Ende 41 des Anbindungselements 39 über eine Buchse 53 an dem zugeordneten Kettenbolzen 35 gehalten.

Die Buchse 53 kann dabei zwischen einer Außenoberfläche des zugeordneten Kettenbolzens 37 und einer Innenoberfläche im Bereich der Durchgangsöffnung 45 des Anbindungselements 39 zwischengelagert sein. Die Buchse 53 kann ringförmig geschlossen sein, insbesondere kreisförmig oder zylinderförmig ausgestaltet sein. Die Buchse 53 kann bei der Montage der Förderkette 5 beispielsweise nachdem das vordere Ende 41 des Anbindungselements 39 mit seiner seitlichen Öffnung 49 über den zugeordneten Kettenbolzen 37 geschwenkt wurde, in einer axialen Richtung auf den verlängerten Kettenbolzen 37 aufgeschoben werden. Hierdurch kann ein Formschluss zwischen dem verlängerten Kettenbolzen 37 und dem Anbindungselement 39 im Bereich seiner vorderen seitlich offenen Durchgangsöffnung 45 generiert werden.

Gemäß einer Ausführungsform kann das Gleitelement 51 und/oder die Buchse 53 zumindest teilweise aus einem Polymerwerkstoff gefertigt sein, das heißt aus Polymerwerkstoff bestehen oder beispielsweise mit einem Polymerwerkstoff beschichtet sein. Vorzugsweise können Polymerwerkstoffe eingesetzt werden, welche einerseits eine ausreichende Festigkeit aufweisen, aber welche andererseits auch ausreichende Gleiteigenschaften zwischen dem Gleitelement 51 bzw. der Buchse 53 einerseits und den zu koppelnden und sich relativ zu diesen Komponenten verschwenkend bewegenden zugeordneten Kettenbolzen 35 und Anbindungselementen 39 andererseits zulassen. Beispielsweise können als Polymerwerkstoffe Duroplaste oder Thermoplaste wie PA, PMMA, POM, GFK, CFK, PVC, PTFE und dergleichen mehr eingesetzt werden.

Gemäß einer Ausführungsform können die Anbindungselemente 39 aus Metall gefertigt sein. Hierdurch können die Anbindungselemente 39 eine ausreichende mechanische Stabilität erhalten, um als Zwischenglied zwischen den daran angebrachten Paletten 7 und den miteinander gekoppelten Kettengliedern 27 der Förderkette 5 wirken zu können und beispielsweise bei einem Bruch eines Kettengliedes Zugkräfte der Förderkette zu übernehmen. Es können beispielsweise hochfeste Metalle wie zum Beispiel Stahl eingesetzt werden.

Gemäß einer Ausführungsform können ferner zumindest an einigen der Kettenbolzen 35, 37, jeweils eine Führungsrolle 55 angeordnet sein, wobei die Führungsrolle 55 relativ zu dem jeweiligen Kettenbolzen 35, 37 um dessen Mittellängsachse M drehbar gelagert sein sollte. Solche Führungsrollen 55 können ähnlich wie bei herkömmlichen Förderketten dazu dienen, die Förderkette 5 während einer Bewegung entlang der Erstreckungsrichtung 17 gegen nicht dargestellte Führungsschienen abzustützen und zu führen beziehungsweise eine Reibung zwischen der Förderkette 5 und einer tragenden und/oder führenden Struktur zu reduzieren. Die Führungsrollen 55 können beispielsweise mit Metall oder mit einem Polymerwerkstoff ausgebildet sein. Die Führungsrollen 55 können reibungsreduziert an den jeweiligen Kettenbolzen 35, 37 gelagert sein, beispielsweise über ein Gleitlager. Die Führungsrollen 55 können zwischen den Kettengliedern und den Anbindungselementen 39 angeordnet sein.

Zusätzlich zu den bereits genannten und detailliert beschriebenen Komponenten können an der Förderkette 5 weitere Komponenten vorgesehen sein. Beispielsweise können axial entlang der verlängerten Kettenbolzen 37 eine oder mehrere Gleitscheiben oder Distanzscheiben 57 vorgesehen sein. Außerdem kann an einem axialen Ende der verlängerten Kettenbolzen 37 jeweils eine Fixierschraube 59 vorgesehen sein, die an dem jeweiligen verlängerten Kettenbolzen 37 angeschraubt werden kann und auf diese Weise die mit diesem Kettenbolzen 37 gekoppelten Komponenten, das heißt insbesondere die Anbindungselemente 39 sowie die Gleitelemente 51 und Buchsen 53, gegen ein axiales Abrutschen von dem Kettenbolzen 37 sichert.

Nachfolgend werden mögliche Ausgestaltungen und Ausführungsformen eines Verfahrens zum Montieren einer Förderkette 5, welche die hierin beschriebenen Merkmale aufweist, beschrieben. Ferner werden mögliche Ausgestaltungen und Ausführungsformen eines Verfahrens zum Montieren eines Palettenbandes 3 mit einer solchen Förderkette 5 sowie eines Verfahrens zum Austauschen eines Anbindungselements 39 in einer solchen Förderkette 5 beschrieben.

Zunächst werden mehrere längliche Kettenglieder 27 sowie mehrere längliche Anbindungselemente 39 bereitgestellt. Die Kettenglieder 27 und Anbindungselemente 39 können strukturelle und/oder funktionelle Eigenschaften aufweisen, wie sie vorangehend beschrieben wurden. Insbesondere können die Kettenglieder 27 mithilfe von Kettenbolzen 35, 37 auf Zug belastbar und quer zu einer jeweiligen Mittellängsachse M der Kettenbolzen 35, 37 verschwenkbar miteinander gekoppelt sein. Anschließend können die Anbindungselemente 39 in einem Kopplungsvorgang miteinander und mit den Kettengliedern 27 gekoppelt werden. Hierbei müssen nicht alle Verfahrensschritte zwingend am selben Montageort und innerhalb eines einzigen Zeitintervalls durchgeführt werden. Konkret können beispielsweise die Kettenglieder 27 und die Kettenbolzen 35, 37 bereits als fertig montierte Kette von einem auf solche Ketten spezialisierten Unterlieferanten bezogen werden.

Der Kopplungsvorgang kann dabei derart ausgestaltet sein, dass sich für die montierte Förderkette 5 die hierin beschriebenen strukturellen und/oder funktionellen Eigenschaften ergeben. Insbesondere wird der Kopplungsvorgang derart ausgestaltet, dass bei der fertig montierten Förderkette 5
- die Anbindungselemente 39 parallel zu der Erstreckungsrichtung 17 der Förderkette 5 hintereinander angeordnet sind;
- jedes der Anbindungselemente 39 an einem vorderen Ende 41 mit einem zugehörigen ersten der Kettenbolzen 35, 37 gekoppelt ist und an einem hinteren Ende 43 mit einem zugehörigen zweiten der Kettenbolzen 35, 37 gekoppelt ist, wobei ein Anbindungselement-Teilungsabstand T2 ein ganzzahlig Vielfaches des Ketten-Teilungsabstandes T1 ist;
- jeweils zwei in der Erstreckungsrichtung 17 benachbarte Anbindungselemente 39 einander überlappen und ein hinteres Ende 43 eines vorderen der beiden Anbindungselemente 39 sowie ein vorderes Ende eines hinteren der beiden Anbindungselemente 39 jeweils mit einem gemeinsamen Kettenbolzen 35, 37 gekoppelt ist und die benachbarten Anbindungselemente 39 hierdurch quer zu der Erstreckungsrichtung 17 verschwenkbar miteinander gekoppelt sind;
- das vordere Ende 41 jedes der Anbindungselemente 39 mit dem jeweiligen ersten Kettenbolzen 35, 37 verschwenkbar und koaxial positioniert gekoppelt ist; und
- das hintere Ende 43 jedes der Anbindungselemente 39 mit dem jeweiligen zweiten Kettenbolzen 35, 37 verschwenkbar und in der Erstreckungsrichtung 17 über eine vorgegebene Distanz d verlagerbar linear geführt gekoppelt ist.

Bei dem Kopplungsvorgang der Anbindungselemente 39 kann dabei jedes der Anbindungselemente 39 zunächst mit einem ersten Ende durch Aufschieben in axialer Richtung mit dem zugehörigen Kettenbolzen 35, 37 gekoppelt werden. Anschließend wird zumindest eines der Anbindungselemente 39, oder alternativ einige oder jedes der Anbindungselemente 39, durch Verschwenken in einer Verschwenkrichtung 61 (siehe angedeutet z.B. Fig. 4a) mit einem entgegengesetzten zweiten Ende in tangentialer Richtung mit dem zugehörigen Kettenbolzen 35, 37 gekoppelt.

Mit anderen Worten wird zum Montieren der Förderkette 5 mit der durch die Anbindungselemente 39 gebildeten Kette jedes der Anbindungselemente 39 zuerst mit einem ersten Ende axial mit einem der Kettenbolzen 35 gekoppelt. Beispielsweise kann hierzu das jeweilige Ende mit einer dort vorgesehenen Durchgangsöffnung 45, 47 über einen der verlängerten Kettenbolzen 37 geschoben werden. Anschließend wird zumindest eines der Anbindungselemente 39 um die Mittellängsachse M des Kettenbolzens 37, mit dem es bereits an seinem ersten Ende gekoppelt ist, in der Verschwenkrichtung 61 verschwenkt und hierbei schließlich in tangentialer Richtung mit dem zugehörigen anderen Kettenbolzen 35, 37 gekoppelt.

Prinzipiell ist es möglich, alle an der Förderkette 5 vorzusehenden Anbindungselemente 39 zunächst mit ihrem ersten Ende axial an den jeweils zugehörigen Kettenbolzen 37 zu koppeln und anschließend durch Verschwenken die jeweiligen zweiten Enden der Anbindungselemente 39 in der tangentialer Richtung mit benachbarten Kettenbolzen 37 zu koppeln.

Es ist alternativ jedoch auch möglich, die Anbindungselemente 39 nacheinander mit ihren beiden Enden jeweils axial mit zugehörigen Kettenbolzen 37 zu koppeln. Dies kann für alle an der umlaufend geschlossenen Förderkette 5 vorzusehenden Anbindungselemente 39 geschehen, mit Ausnahme des letzten Anbindungselements 39. Dieses letzte Anbindungselement 39 kann nicht in der gleichen Weise montiert werden, da einer der beiden Kettenbolzen 37, an dem es angekoppelt werden soll, bereits von einem anderen, zuvor montierten Anbindungselement 39 "blockiert" ist. Daher muss zumindest dieses letzte Anbindungselement 39 mit seinem zweiten Ende in der Verschwenkrichtung 61 verschwenkt werden, um es dann tangential an dem "blockierten" Kettenbolzen 37 ankoppeln zu können.

Es wird darauf hingewiesen, dass je nach Ausgestaltung der Anbindungselemente 39 deren erstes und zweites Ende dem hierin zuvor beschriebenen vorderen und hinteren Ende 41, 43 oder umgekehrt entsprechen können.

Bei dem in den Figuren dargestellten Beispiel entspricht das erste Ende des Anbindungselements 39 dem hinteren Ende 43, welches mit seiner Langloch-artigen und ringförmig umschlossenen Durchgangsöffnung 47 auf einen der verlängerten Kettenbolzen 37 geschoben wird. Nachdem das Anbindungselement 39 mit seinem ersten Ende an den zugehörigen Kettenbolzen 37 gekoppelt ist, wird dieses Anbindungselement 39 dann in der Verschwenkrichtung 61 verschwenkt und somit mit seinem entgegengesetzten zweiten, vorderen Ende 41 in tangentialer Richtung bewegt und dabei mit dem zugehörigen anderen Kettenbolzen 37 gekoppelt.

Gemäß einer Ausführungsform wird hierbei jedes Anbindungselement 39 an seinem zweiten Ende in einer Richtung quer zur Erstreckungsrichtung 17 und quer zur Mittellängsachse M des zugehörigen Kettenbolzens 37 lösbar mit dem zugehörigen Kettenbolzen 37 gekoppelt.

Anders ausgedrückt soll jedes der Anbindungselemente 39 vorzugsweise zumindest an seinem zweiten Ende derart mit dem zugehörigen Kettenbolzen 37 gekoppelt sein, dass es in einer Richtung quer zu der Erstreckungsrichtung 17 und quer zu der Mittellängsachse M des zugehörigen Kettenbolzens 37 wieder aus der Kopplung gelöst werden kann.

Insbesondere kann gemäß einer Ausführungsform das Anbindungselement 39 am ersten und am zweiten Ende jeweils eine Durchgangsöffnung 45, 47 aufweisen. Durch diese Durchgangsöffnungen 45, 47 hindurch kann sich im mit dem jeweiligen Kettenbolzen 37 gekoppelten Zustand der jeweilige Kettenbolzen 37 erstrecken. Das Anbindungselement 39 weist hierbei zumindest an der Durchgangsöffnung 45 an dem zweiten Ende eine seitliche Öffnung 49 derart auf, dass der zugehörige Kettenbolzen 37 durch die seitliche Öffnung 49 aus der Durchgangsöffnung 45 heraus bzw. in die Durchgangsöffnung 45 hinein bewegt werden kann. Bei dem Kopplungsvorgang wird dann jedes Anbindungselement 39 derart in der Verschwenkrichtung 61 verschwenkt, dass der zugehörige Kettenbolzen 37 durch die seitliche Öffnung 49 im zweiten Ende des Anbindungselements 39 in die dortige Durchgangsöffnung 45 gelangt.

Mit anderen Worten kann das Anbindungselement 39 an beiden Enden 41, 43 Durchgangsöffnungen 45, 47 aufweisen, durch die sich im gekoppelten Zustand der jeweils zugehörige Kettenbolzen 37 erstrecken kann. An dem axial zu koppelnden ersten Ende kann die dortige Durchgangsöffnung 47 geschlossen umrandet sein. An dem durch das Verschwenken des Anbindungselements 39 in der Verschwenkrichtung 61 zu koppelnden zweiten Ende jedoch sollte die dortige Durchgangsöffnung 45 nicht geschlossen umrandet sein, sondern eine seitliche Öffnung 49 aufweisen. Diese seitliche Öffnung 49 kann breit genug sein, dass beim Verschwenken des Anbindungselements 39 der zugehörige Kettenbolzen 35 tangential durch diese seitliche Öffnung 49 hindurch bewegt werden kann, bis er sich am Ende der Verschwenkbewegung im Innern der dortigen Durchgangsöffnung 45 befindet.

Gemäß einer Ausführungsform kann das erste Ende der Anbindungselemente 39 jeweils über ein Gleitelement 51 an dem zugehörigen Kettenbolzen 37 gehalten sein. Das Gleitelement 51 wird hierbei vor dem axialen Aufschieben des Anbindungselements 39 an dem zugehörigen Kettenbolzen 39 angeordnet und dann beim axialen Aufschieben des Anbindungselements 39 zwischen einander gegenüberliegende Oberflächen des Anbindungselements 39 einerseits und des zugehörigen Kettenbolzens 37 andererseits zwischengelagert.

Anders ausgedrückt kann das erste Ende eines Anbindungselements 39 mit dem zugehörigen Kettenbolzen 37 gekoppelt sein, indem es diesen zugehörigen Kettenbolzen 37 nicht direkt kontaktiert, sondern an dem Kettenbolzen 37 über das zwischengelagerte Gleitelement 51 gehalten ist. Dieses Gleitelement 51 kann beispielsweise wie oben beschrieben vierkantig bzw. rechteckig sein und in eine Langloch-artige Durchgangsöffnung 47 an dem ersten Ende des Anbindungselements 39 eingreifen.

Während des Kopplungsvorgangs kann hierbei zuerst das Gleitelement 51 an dem zugehörigen Kettenbolzen 37 angebracht werden, beispielsweise indem dieses axial auf den Kettenbolzen 37 aufgeschoben wird. Auf das derart angebrachte Gleitelement 51 kann dann das Anbindungselement 39 mit seinem ersten Ende axial gekoppelt, d.h. beispielsweise axial aufgeschoben werden.

Gemäß einer konkretisierten Ausführungsform kann das zweite Ende des Anbindungselements 39 über eine Buchse 53 an dem zugehörigen Kettenbolzen 37 gehalten sein. Die Buchse 53 kann hierbei nach dem Verschwenken des Anbindungselements 39 in tangentialer Richtung an dem zugehörigen Kettenbolzen 37 angeordnet werden. Hierbei kann die Buchse 53 derart ausgestaltet sein, dass sie nach diesem Anordnen formschlüssig mit der Durchgangsöffnung 45 in dem zweiten Ende des Anbindungselements 39 zusammenwirkt und dadurch ein Verschwenken des Anbindungselements 39 entgegen der Verschwenkrichtung 61 blockiert.

Mit anderen Worten kann auch das zweite Ende des Anbindungselements 39 mit dem zugehörigen Kettenbolzen 37 gekoppelt sein, indem es diesen Kettenbolzen 37 nicht direkt kontaktiert, sondern an dem Kettenbolzen 37 über die zwischengelagerte Buchse 53 gehalten ist.

Während des Kopplungsvorgangs kann hierbei zuerst das zweite Ende mit seiner Durchgangsöffnung 45 über den Kettenbolzen 37 geschwenkt werden. Anschließend kann das zweite Ende mithilfe der Buchse 53 an dem Kettenbolzen 37 fixiert werden. Hierzu kann die Buchse 53 beispielsweise axial über den Kettenbolzen 37 geschoben werden.

Die Buchse 53 kann dabei derart ausgestaltet sein, dass sie einen zunächst noch vorhandenen Zwischenraum zwischen dem Kettenbolzen 37 und dem Rand der Durchgangsöffnung 45 in dem zweiten Ende des Anbindungselements 39 ausfüllt und somit formschlüssig mit dieser Durchgangsöffnung 45 zusammenwirken kann. Hierzu kann die Buchse 53 beispielsweise einen größeren Durchmesser aufweisen als laterale Abmessungen der seitlichen Öffnung 49 an der Durchgangsöffnung 45. Hierdurch kann die Buchse 53, wenn sie auf den zugehörigen Kettenbolzen 37 aufgeschoben und in die Durchgangsöffnung 45 eingeschoben wurde, ein Verschwenken des Anbindungselements 39 entgegen der Verschwenkrichtung 61 blockieren. Durch die Buchse 53 ist somit das Anbindungselement 39 formschlüssig an dem zugehörigen Kettenbolzen 37 gehalten.

Gemäß einer Ausführungsform kann jedes Anbindungselement 39 nach dem Kopplungsvorgang mithilfe jeweils eines in axialer Richtung lösbaren Befestigungselements 63 mit jedem seiner Enden an dem jeweils zugehörigen Kettenbolzen 37 befestigt werden.

Anders ausgedrückt kann, nachdem das Anbindungselement 39 beispielsweise zunächst axial mit seinem ersten Ende auf einen der verlängerten Kettenbolzen 37 aufgeschoben und dann verschwenkend mit seinem zweiten Ende in Eingriff mit einem benachbarten verlängerten Kettenbolzen 37 gebracht wurde, ein Befestigungselement 63 beispielsweise in Form der Fixierschraube 59 an den verlängerten Kettenbolzen 37 fixiert werden. Dieses Befestigungselements 63 kann ein Lösen des Anbindungselements 39 in axialer Richtung von dem verlängerten Kettenbolzen 37 vermeiden. Allerdings kann das Befestigungselement 63 selbst von dem Kettenbolzen 37 gelöst werden, beispielsweise durch Abschrauben der Fixierschraube 59, sodass anschließend das Anbindungselement 39 in axialer Richtung von dem Kettenbolzen 37 abgezogen werden kann.

Eine beispielhafte Ausgestaltung des Kopplungsvorgangs für eine Ausführungsform des hierin beschriebenen Verfahrens zum Montieren einer Förderkette 5 kann mit Bezug auf die Figuren 3 und 4a bis 4c wie folgt beschrieben werden: Damit die Anbindungselemente 39 an der Förderkette 5 montiert werden können, weist diese an jeder dritten Gelenksstelle verlängerte Kettenbolzen 37 auf. An diesen Kettenbolzen 37 werden zuerst Führungsrollen 55 angeordnet, d.h. beispielsweise axial aufgeschoben. Dann werden die Gleitelemente 51 auf die verlängerten Kettenbolzen 37 axial aufgeschoben. Anschließend werden die Anbindungselemente 39 montiert. Hierzu können die Anbindungselemente 39 jeweils mit ihrem ersten Ende axial auf die Kettenbolzen 37 geschoben werden und dann in der Verschwenkrichtung 61 verschwenkt werden, um die jeweiligen zweiten Enden mit benachbarten verlängerten Kettenbolzen 37 zu koppeln. Alternativ können alle Anbindungselemente 39 mit Ausnahme eines letzten Anbindungselements 39 nacheinander mit ihren beiden Enden auf benachbarte verlängerte Kettenbolzen 37 axial aufgeschoben werden. Zumindest das letzte Anbindungselement 39 kann jedoch nicht in einer derartigen Weise axial aufgeschoben werden, sondern muss mit seinem zweiten Ende tangential verschwenkt werden, um mit dem zugehörigen Kettenbolzen 37 gekoppelt zu werden. Anschließend können die Anbindungselemente 39 beispielsweise durch axiales Einschieben der Buchsen 53 und deren axialer Fixierung mithilfe der Fixierschrauben 59 an den verlängerten Kettenbolzen 37 gesichert werden. Zwischen den einzelnen Elementen können bei Bedarf noch Gleit- und/oder Distanzscheiben 57 vorgesehen werden, welche insbesondere Flanken der Anbindungselemente 39 voneinander distanzieren können.

Die hierin beschriebene Förderkette 5 bzw. die mit dem hierin beschriebenen Verfahren montierte Förderkette 5 kann ein besonders einfaches Austauschen von Anbindungselementen 39 in der Förderkette 5 ermöglichen.

Bei einem hierfür eingesetzten Verfahren wird zunächst das auszutauschende Anbindungselement 39 und gegebenenfalls ein zu diesem benachbartes Anbindungselement 39 entgegen der Verschwenkrichtung 61 mit seinem zweiten Ende in tangentialer Richtung verschwenkt, um dadurch das zweite Ende von dem zugehörigen Kettenbolzen 37 zu entkoppeln. Anschließend wird das auszutauschende Anbindungselement 39 durch Abziehen des ersten Endes in axialer Richtung von dem zugehörigen Kettenbolzen 37 gelöst. Das auf diese Weise gelöste Anbindungselement 39 wird dann durch ein Ersatz- Anbindungselement ersetzt. Dieses Ersatz-Anbindungselement wird dann, ähnlich wie bei dem ursprünglichen Montieren der Förderkette 5, zunächst mit seinem ersten Ende durch Aufschieben in axialer Richtung mit dem zugehörigen Kettenbolzen 37 und anschließendes Verschwenken in der Verschwenkrichtung 61 mit einem entgegengesetzten zweiten Ende in tangentialer Richtung mit dem zugehörigen Kettenbolzen 37 gekoppelt.

Insbesondere im Rahmen eines solchen Austauschens eines Anbindungselements 39 wirkt es vorteilhaft, dass jedes einzelne Anbindungselement 39 der Förderkette 5 an seinem zweiten Ende lösbar mit dem zugehörigen Kettenbolzen 37 gekoppelt ist und die dortige Kopplung nicht durch ein axiales Abziehen des Anbindungselements 39, sondern durch ein tangentiales Verschwenken des Anbindungselements 39 zu bewirken ist. Obwohl benachbarte Anbindungselemente 39 einander in der Erstreckungsrichtung 17 überlappen, kann hierdurch erreicht werden, dass ein einzelnes Anbindungselement 39 an seinem zweiten Ende aus der Kette verschwenkend gelöst werden kann, ohne dass hierfür das benachbarte Anbindungselemente 39 an seinem ersten Ende ebenfalls gelöst werden müsste und hierzu axial von dem Kettenbolzen 37 abgezogen werden müsste.

Hierdurch kann ein Austauschen einzelner Anbindungselemente 39 und/oder daran befestigter Paletten 7 erheblich vereinfacht werden. Insbesondere können verschlissene Anbindungselemente 39 einzeln und in einfacher Weise gewechselt werden.

Anders ausgedrückt kann beispielsweise bei dem in den Figuren dargestellten Beispiel bei einer Wartung ein einzelnes Anbindungselement 39 entfernt werden, indem die beiden Fixierschrauben 59 und Buchsen 53 an den zugehörigen verlängerten Kettenbolzen 37 der Förderkette 5 im Bereich dieses Anbindungselements 39 entfernt werden. Dann muss das überdeckende Ende des benachbarten Anbindungselements 39 verschwenkt werden. Daraufhin liegt das zu entfernende Anbindungselement 39 nun frei und kann seinerseits aus der Kette gelöst werden. Hierzu kann das vordere Ende 41 zunächst nach oben verschwenkt werden und dann das hintere Ende 43 axial vom dort zugehörigen Kettenbolzen 37 abgezogen werden.

Mit der hierin beschriebenen Förderkette 5 bzw. der gemäß dem hierin beschriebenen Verfahren montierten Förderkette 5 kann in vorteilhafter Weise auch ein Palettenband 3 für einen Fahrsteig 1 montiert werden.

Hierzu werden zunächst zwei Förderketten 5 gemäß dem hierin vorgestellten Verfahren montiert und anschließend parallel zueinander angeordnet. Anschließend werden mehrere Paletten 7 an den zwei Förderketten 5 montiert. Dabei werden die Paletten 7 in der Erstreckungsrichtung 17 der Förderketten 5 hintereinander angeordnet und jede der Paletten 7 an einem ersten seitlichen Ende an einem der Anbindungselemente 39 der ersten Förderkette 5 und an einem entgegengesetzten zweiten seitlichen Ende an einem der Anbindungselemente 39 der zweiten Förderkette 5 befestigt.

Anders ausgedrückt kann das Palettenband 3 durch zwei mit Anbindungselementen 39 ergänzte Förderketten 5 und den an den Anbindungselementen 39 festgeschraubten Paletten 7 gebildet werden. Hierbei kann beispielsweise in einer Werksmontage eine Montagevorrichtung eingesetzt werden, deren positionierendes Teil zwei den verschiedenen Palettenbreiten anpassbare Kettenführungen sind. Am einfachsten lässt sich dies beispielsweise mit einer drehbar gelagerten Achse mit Kettenrädern realisieren. Die Montagevorrichtung kann durch Bestückungsautomaten, beispielsweise in Form von Robotern, voll automatisiert sein.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Montieren einer Förderkette (5) für ein Palettenband (3) eines Fahrsteigs (1), wobei das Verfahren den Schritt aufweist:
Bereitstellen mehrerer länglicher Kettenglieder (27), welche in einer Erstreckungsrichtung (17) der Förderkette (5) mit einem Ketten-Teilungsabstand (T1) hintereinander angeordnet sind, wobei jeweils zwei in der Erstreckungsrichtung (17) benachbarte Kettenglieder (27) in einem Gelenkbereich (33) mittels eines Kettenbolzens (35, 37) miteinander auf Zug belastbar und quer zu der Erstreckungsrichtung (17) um eine Mittellängsachse (M) des Kettenbolzens (35, 37) verschwenkbar miteinander gekoppelt sind;
Bereitstellen mehrerer länglicher Anbindungselemente (39), an welche Paletten (7) befestigt werden können;
Koppeln der Anbindungselemente (39) in einem Kopplungsvorgang miteinander und mit den Kettengliedern (27), wobei:
- die Anbindungselemente (39) parallel zu der Erstreckungsrichtung (17) der Förderkette (5) hintereinander angeordnet werden,
- jedes der Anbindungselemente (39) an einem vorderen Ende (41) mit einem zugehörigen ersten der Kettenbolzen (37) welcher Kettenglieder (27) koppelt, gekoppelt wird und an einem hinteren Ende (43) mit einem zugehörigen zweiten der Kettenbolzen (37) welcher Kettenglieder (27) koppelt, gekoppelt wird, wobei ein Anbindungselement-Teilungsabstand (T2) zwischen dem ersten und dem zweiten Kettenbolzen (37) ein ganzzahlig Vielfaches des Ketten-Teilungsabstandes (T1) ist, und
- die Anbindungselemente (39) derart mit den Kettenbolzen (37) gekoppelt werden, dass diese quer zu der Erstreckungsrichtung (17) um die Mittellängsachsen (M) der Kettenbolzen (37) verschwenkt werden können, wobei jeweils zwei in der Erstreckungsrichtung (17) benachbarte Anbindungselemente (39) einander überlappend angeordnet werden und ein hinteres Ende (43) eines vorderen der beiden Anbindungselemente (39) sowie ein vorderes Ende (41) eines hinteren der beiden Anbindungselemente (39) jeweils mit einem gemeinsamen Kettenbolzen (37) gekoppelt wird,
**gekennzeichnet durch die weiteren Schritte:**
dass das vordere Ende (41) jedes der Anbindungselemente (39) mit dem jeweiligen ersten Kettenbolzen (37) verschwenkbar und koaxial positioniert gekoppelt ist und das hintere Ende (43) jedes der Anbindungselemente (39) mit dem jeweiligen zweiten Kettenbolzen (37) verschwenkbar und in der Erstreckungsrichtung (17) über eine vorgegebene Distanz (d) verlagerbar linear geführt gekoppelt ist; und
dass zumindest eines der Anbindungselemente (39) bei dem Kopplungsvorgang zunächst mit einem ersten der beiden Enden durch Aufschieben in axialer Richtung mit dem zugehörigen Kettenbolzen (37) gekoppelt wird und anschließend durch Verschwenken in einer Verschwenkrichtung (61) mit einem, dem ersten Ende entgegengesetzten zweiten Ende in tangentialer Richtung mit dem, diesem Ende zugehörigen Kettenbolzen (37) gekoppelt wird.

2. Verfahren nach Anspruch 1, wobei jedes Anbindungselement (39) an seinem zweiten Ende in einer Richtung quer zur Erstreckungsrichtung (17) und quer zur Mittellängsachse (M) des zugehörigen Kettenbolzens (37) lösbar mit dem zugehörigen zweiten Kettenbolzen (37) gekoppelt wird.

3. Verfahren nach Anspruch 1 oder 2, wobei das Anbindungselement (39) am ersten und am zweiten Ende jeweils eine Durchgangsöffnung (45, 47) aufweist, durch die hindurch sich im mit dem jeweils zugehörigen Kettenbolzen (37) gekoppelten Zustand der jeweilige Kettenbolzen (37) erstreckt, und wobei das Anbindungselement (39) zumindest an der Durchgangsöffnung (45) am zweiten Ende eine seitliche Öffnung (49) derart aufweist, dass der Kettenbolzen (37) durch die seitliche Öffnung (49) bei einem Entkopplungsvorgang aus der Durchgangsöffnung (45) heraus bzw. bei einem Kopplungsvorgang in die Durchgangsöffnung (45) hinein bewegt werden kann, wobei jedes Anbindungselement (39) bei dem Kopplungsvorgang derart in der Verschwenkrichtung (61) verschwenkt wird, dass der zugehörige zweite Kettenbolzen (37) durch die seitliche Öffnung (49) im zweiten Ende des Anbindungselements (39) in die dortige Durchgangsöffnung (45) gelangt.

4. Verfahren nach einem der Ansprüche 1 bis 3, wobei das erste Ende der Anbindungselemente (39) jeweils über ein Gleitelement (51) an dem zugehörigen Kettenbolzen (37) gehalten wird, wobei das Gleitelement (51) vor dem axialen Aufschieben des Anbindungselements (39) an dem zugehörigen Kettenbolzen (37) angeordnet wird und beim axialen Aufschieben des Anbindungselements (39) zwischen einander gegenüberliegende Oberflächen des Anbindungselements (39) einerseits und des zugehörigen Kettenbolzens (37) andererseits zwischengelagert wird.

5. Verfahren nach einem der Ansprüche 1 bis 4, wobei das zweite Ende des Anbindungselements (39) über eine Buchse (53) an dem zugehörigen Kettenbolzen (37) gehalten ist, wobei die Buchse (53) nach dem Verschwenken des Anbindungselements (39) in tangentialer Richtung an dem zugehörigen Kettenbolzen (37) angeordnet wird und derart ausgestaltet ist, dass sie nach diesem Anordnen formschlüssig mit der Durchgangsöffnung (45) in dem zweiten Ende des Anbindungselements (39) zusammenwirkt und dadurch ein Verschwenken des Anbindungselements (39) entgegen der Verschwenkrichtung (61) blockiert.

6. Verfahren nach einem der Ansprüche 1 bis 5, wobei jedes Anbindungselement (39) nach dem Kopplungsvorgang mithilfe jeweils eines in axialer Richtung lösbaren Befestigungselements (63) mit jedem seiner Enden (41, 43) an dem jeweils zugehörigen Kettenbolzen (37) befestigt wird.

7. Verfahren zum Austauschen eines Anbindungselements (39) in einer Förderkette (5), welche gemäß einem Verfahren nach einem der Ansprüche 1 bis 6 montiert wurde, wobei das Verfahren aufweist:
Verschwenken des auszutauschenden Anbindungselements (39) entgegen der Verschwenkrichtung (61) mit seinem zweiten Ende in tangentialer Richtung, um dadurch das zweite Ende von dem zugehörigen zweiten Kettenbolzen (37) zu entkoppeln, und anschließend Lösen des auszutauschenden Anbindungselements (39) durch Abziehen des ersten Endes in axialer Richtung von dem zugehörigen ersten Kettenbolzen (37);
Ersetzen des auf diese Weise gelösten Anbindungselements (39) durch ein Ersatz-Anbindungselement;
Koppeln des Ersatz-Anbindungselements zunächst an einem ersten Ende mit dem zugehörigen ersten Kettenbolzen (37) durch Aufschieben in axialer Richtung und anschließendes Koppeln des Ersatz-Anbindungselements an einem entgegengesetzten zweiten Ende mit dem zugehörigen zweiten Kettenbolzen (37) durch Verschwenken des Ersatz-Anbindungselements in der Verschwenkrichtung (61).

8. Verfahren zum Montieren eines Palettenbandes (3) für einen Fahrsteig (1), aufweisend:
Montieren einer ersten und einer zweiten Förderkette (5) gemäß einem Verfahren der Ansprüche 1 bis 6;
Anordnen der zwei Förderketten (5) parallel zueinander; und
Befestigen mehrerer Paletten (7) an den zwei Förderketten (5), wobei die Paletten (7) in der Erstreckungsrichtung (17) der Förderketten (5) hintereinander angeordnet werden;
wobei jede der Paletten (7) an einem ersten seitlichen Ende an einem der Anbindungselemente (39) der ersten Förderkette (5) und an einem entgegengesetzten zweiten seitlichen Ende an einem der Anbindungselemente (39) der zweiten Förderkette (5) befestigt wird.

## Claims

1. Method for mounting a conveyor chain (5) for a pallet belt (3) of a moving walkway (1), the method comprising the step of
providing a plurality of elongate chain links (27) which are arranged at a chain spacing distance (T1) one behind the other in an extension direction (17) of the conveyor chain (5), two chain links (27) adjacent in the extension direction (17) together being stressable with regard to tension in a joint region (33) by means of a chain pin (35, 37), and being pivotally coupled to one another transversely to the extension direction (17) about a central longitudinal axis (M) of the chain pin (35, 37);
providing a plurality of elongate connecting elements (39), to which pallets (7) can be fastened;
coupling the connecting elements (39) to one another and to the chain links (27) in one coupling process:
- the connecting elements (39) being arranged one behind the other in parallel with the extension direction (17) of the conveyor chain (5),
- each of the connecting elements (39) being coupled at a front end (41) to an associated first one of the chain pins (37), which couples chain links (27), and at a rear end (43) to an associated second one of the chain pins (37), which couples chain links (27), a connecting element spacing distance (T2) between the first and second chain pin (37) being an integer multiple of the chain spacing distance (T1), and
- the connecting elements (39) being coupled to the chain pins (37) such that they can be pivoted transversely to the extension direction (17) about the central longitudinal axes (M) of the chain pins (37), two connecting elements (39) adjacent in the extension direction (17) being arranged so as to overlap one another and a rear end (43) of a front of the two connecting elements (39) and a front end (41) of a rear of the two connecting elements (39) each being coupled to a common chain pin (37),
**characterized by the further steps of:**
it being possible for the front end (41) of each of the connecting elements (39) to be coupled pivotally and in a coaxially positioned manner to each first chain pin (37), and it being possible for the rear end (43) of each of the connecting elements (39) to be pivotally coupled to each second chain pin (37) and guided in the extension direction (17) in a displaceably linear manner over a predetermined distance (d); and
during the coupling process, at least one of the connecting elements (39) being initially coupled to the associated chain pin (37) with a first of the two ends by sliding it in the axial direction and then, by pivoting it in a pivoting direction (61), being coupled in the tangential direction to the chain pin (37) that is associated with this end with a second end that is opposite the first end.

2. Method according to claim 1, wherein each connecting element (39) is detachably coupled at its second end in a direction transverse to the extension direction (17) and transverse to the central longitudinal axis (M) of the associated chain pin (37) to the associated second chain pin (37).

3. Method according to claim 1 or 2, wherein the connecting element (39) has a passage opening (45, 47) at each of the first and second ends through which each chain pin (37) extends when it is in the coupled state with each chain pin (37), and wherein the connecting element (39), at least at the passage opening (45) on the second end, has a lateral opening (49) such that the chain pin (37) can be moved through the lateral opening (49) out of the passage opening (45) during a decoupling process or into the passage opening (45) during a coupling process, wherein each connecting element (39) is pivoted in the pivoting direction (61) during the coupling process such that the associated second chain pin (37) passes through the lateral opening (49) in the second end of the connecting element (39) into the passage opening (45) located there.

4. Method according to any of claims 1 to 3, wherein the first end of the connecting elements (39) is each held on the associated chain pin (37) via a sliding element (51), wherein, prior to the axial shifting of the connecting element (39), the sliding element (51) is arranged on the associated chain pin (37) and interposed between opposite surfaces of the connecting element (39) and the associated chain pin (37) during the axial shifting of the connecting element (39).

5. Method according to any of claims 1 to 4, wherein the second end of the connecting element (39) is held via a bushing (53) on the associated chain pin (37), wherein the bushing (53), after the connecting element (39) pivots in the tangential direction, is arranged on the associated chain pin (37) and is designed such that, according to this arrangement, it interacts interlockingly with the passage opening (45) in the second end of the connecting element (39) and thereby blocks pivoting of the connecting element (39) counter to the pivoting direction (61).

6. Method according to any of claims 1 to 5, wherein after the coupling process, each connecting element (39) can be fastened with each of its ends (41, 43) to each associated chain pin (37) by means of a fastening element (63) that is detachable in the axial direction.

7. Method for replacing a connecting element (39) in a conveyor chain (5) which has been mounted according to a method according to any of claims 1 to 6, wherein the method comprises:
pivoting the connecting element (39) to be replaced counter the pivoting direction (61) with its second end in the tangential direction in order to decouple the second end from the associated second chain pin (37), and then releasing the connecting element (39) to be replaced by pulling off the first end in the axial direction from the associated first chain pin (37);
replacing the connecting element (39) thus detached with a replacement connecting element;
initially coupling the replacement connecting element at a first end to the associated first chain pin (37) by sliding it in the axial direction, and then coupling the replacement connecting element at the opposite second end to the associated second chain pin (37) by pivoting the replacement connecting element in the pivoting direction (61).

8. Method for mounting a pallet belt (3) for a moving walkway (1), comprising:
mounting a first and a second conveyor chain (5) according to any of claims 1 to 6;
arranging the two conveyor chains (5) in parallel with one another; and
fastening a plurality of pallets (7) to the two conveyor chains (5), wherein the pallets (7) are arranged one behind the other in the extension direction (17) of the conveyor chains (5);
wherein each of the pallets (7) is fastened at a first lateral end to one of the connecting elements (39) of the first conveyor chain (5) and at an opposite second lateral end to one of the connecting elements (39) of the second conveyor chain (5).

## Revendications

1. Procédé permettant le montage d'une chaîne de transport (5) pour une bande à palettes (3) d'un trottoir roulant (1), le procédé comprenant l'étape de :
fourniture de plusieurs maillons de chaîne (27) allongés, lesquels sont disposés les uns derrière les autres dans un sens d'extension (17) de la chaîne de transport (5) à une distance de séparation de chaîne (T1), respectivement deux maillons de chaîne (27) adjacents dans le sens d'extension (17) pouvant être chargés ensemble en traction au moyen d'un boulon de chaîne (35, 37) dans une zone d'articulation (33) et étant accouplés l'un à l'autre de manière à pouvoir pivoter transversalement par rapport au sens d'extension (17) autour d'un axe longitudinal médian (M) du boulon de chaîne (35, 37) ;
fourniture de plusieurs éléments de liaison (39) allongés auxquels des palettes (7) peuvent être fixées ;
accouplement des éléments de liaison (39) les uns aux autres et aux maillons de chaîne (27) dans un processus d'accouplement :
- les éléments de liaison (39) étant disposés les uns derrière les autres parallèlement par rapport au sens d'extension (17) de la chaîne de transport (5),
- chacun des éléments de liaison (39) étant accouplé au niveau d'une extrémité avant (41) à un premier boulon de chaîne associé des boulons de chaîne (37), lequel accouple des maillons de chaîne (27), et étant accouplé au niveau d'une extrémité arrière (43) à un second boulon de chaîne associé des boulons de chaîne (37), lequel accouple des maillons de chaîne (27), une distance de séparation d'élément de liaison (T2) entre le premier et le second boulon de chaîne (37) étant un multiple entier de la distance de séparation de chaîne (T1), et
- les éléments de liaison (39) étant accouplés aux boulons de chaîne (37) de manière à pouvoir pivoter transversalement par rapport au sens d'extension (17) autour de l'axe longitudinal médian (M) des boulons de chaîne (37), respectivement deux éléments de liaison (39) adjacents dans le sens d'extension (17) étant disposés de manière à se chevaucher et une extrémité arrière (43) d'un élément de liaison avant des deux éléments de liaison (39) ainsi qu'une extrémité avant (41) d'un élément de liaison arrière des deux éléments de liaison (39) étant respectivement accouplées à un boulon de chaîne (37) commun,
**caractérisé par les étapes supplémentaires de :**
que l'extrémité avant (41) de chacun des éléments de liaison (39) est accouplée au premier boulon de chaîne (37) respectif de manière à pouvoir pivoter et être positionnée de manière coaxiale et l'extrémité arrière (43) de chacun des éléments de liaison (39) est accouplée au second boulon de chaîne (37) respectif de manière à pouvoir pivoter et de manière à pouvoir être déplacée de manière guidée linéairement dans le sens d'extension (17) sur une distance prédéterminée (d) ; et
qu'au moins l'un des éléments de liaison (39) est d'abord accouplé, lors du processus d'accouplement, avec une première des deux extrémités, au boulon de chaîne (37) associé par enfoncement dans le sens axial et est ensuite accouplé, avec une seconde extrémité opposée à la première extrémité dans le sens tangentiel, au boulon de chaîne (37) associé à ladite extrémité par pivotement dans un sens de pivotement (61).

2. Procédé selon la revendication 1, chaque élément de liaison (39) étant accouplé au niveau de sa seconde extrémité au second boulon de chaîne (37) associé de manière amovible dans un sens transversal au sens d'extension (17) et transversal à l'axe longitudinal médian (M) du boulon de chaîne (37) associé.

3. Procédé selon la revendication 1 ou 2, l'élément de liaison (39) présentant, au niveau de la première extrémité et au niveau de la seconde extrémité, respectivement une ouverture de passage (45, 47), à travers laquelle le boulon de chaîne (37) respectif s'étend dans l'état accouplé avec le boulon de chaîne (37) respectivement associé, et l'élément de liaison (39) présentant, au moins au niveau de l'ouverture de passage (45) au niveau de la seconde extrémité, une ouverture latérale (49) de telle sorte que le boulon de chaîne (37) peut être déplacé à travers l'ouverture latérale (49) hors de l'ouverture de passage (45) lors d'un processus de désaccouplement ou dans l'ouverture de passage (45) lors d'un processus d'accouplement, lors du processus d'accouplement, chaque élément de liaison (39) étant pivoté dans le sens de pivotement (61) de telle sorte que le second boulon de chaîne (37) associé arrive à travers l'ouverture latérale (49) dans la seconde extrémité de l'élément de liaison (39) dans l'ouverture de passage (45) qui s'y trouve.

4. Procédé selon l'une des revendications 1 à 3, la première extrémité des éléments de liaison (39) étant maintenue sur le boulon de chaîne (37) associé respectivement par l'intermédiaire d'un élément coulissant (51), l'élément coulissant (51) étant disposé sur le boulon de chaîne (37) associé avant l'enfoncement axial de l'élément de liaison (39) et, lors de l'enfoncement axial de l'élément de liaison (39), étant interposé entre des surfaces opposées l'une à l'autre de l'élément de liaison (39) d'une part et le boulon de chaîne (37) associé d'autre part.

5. Procédé selon l'une des revendications 1 à 4, la seconde extrémité de l'élément de liaison (39) étant maintenue sur le boulon de chaîne (37) associé par l'intermédiaire d'une douille (53), la douille (53), après le pivotement de l'élément de liaison (39) dans le sens tangentiel, étant disposée sur le boulon de chaîne (37) associé et étant conçue de telle sorte qu'après ladite disposition, elle coopère par complémentarité de formes avec l'ouverture de passage (45) dans la seconde extrémité de l'élément de liaison (39) et bloque de ce fait un pivotement de l'élément de liaison (39) à l'opposé du sens de pivotement (61).

6. Procédé selon l'une des revendications 1 à 5, après le processus d'accouplement, chaque élément de liaison (39) étant fixé avec chacune de ses extrémités (41, 43) au boulon de chaîne (37) respectivement associé à l'aide de respectivement un élément de fixation (63) amovible dans le sens axial.

7. Procédé permettant le changement d'un élément de liaison (39) dans une chaîne de transport (5) qui a été montée conformément à un procédé selon l'une des revendications 1 à 6, le procédé présentant :
le pivotement de l'élément de liaison (39) à changer à l'opposé du sens de pivotement (61) avec sa seconde extrémité dans le sens tangentiel afin de désaccoupler de ce fait la seconde extrémité du second boulon de chaîne (37) associé, et ensuite la libération de l'élément de liaison (39) à changer par retrait de la première extrémité dans le sens axial du premier boulon de chaîne (37) associé ;
le remplacement de l'élément de liaison (39) ainsi détaché par un élément de liaison de remplacement ;
l'accouplement de l'élément de liaison de remplacement, d'abord au niveau d'une première extrémité, au premier boulon de chaîne (37) associé par enfoncement dans le sens axial et ensuite l'accouplement de l'élément de liaison de remplacement, au niveau d'une seconde extrémité opposée, au second boulon de chaîne (37) associé par pivotement de l'élément de liaison de remplacement dans le sens de pivotement (61).

8. Procédé permettant le montage d'une bande à palettes (3) pour un trottoir roulant (1), présentant :
le montage d'une première et d'une seconde chaîne de transport (5) conformément à un procédé des revendications 1 à 6 ;
la disposition des deux chaînes de transport (5) parallèlement l'une à l'autre ; et
la fixation de plusieurs palettes (7) sur les deux chaînes de transport (5), les palettes (7) étant disposées les unes derrière les autres dans le sens d'extension (17) de la chaîne de transport (5) ;
chacune des palettes (7) étant fixée, au niveau d'une première extrémité latérale, à l'un des éléments de liaison (39) de la première chaîne de transport (5) et, au niveau d'une seconde extrémité latérale opposée, à l'un des éléments de liaison (39) de la seconde chaîne de transport (5).
